(19) Europäisches Patentamt
European Patent Office
Office européen des brevets

(11) **EP 3 782 915 B1**

(12) **EUROPEAN PATENT SPECIFICATION**

(45) Date of publication and mention
of the grant of the patent:
**06.09.2023 Bulletin 2023/36**

(21) Application number: **18745991.2**

(22) Date of filing: **18.04.2018**

(51) International Patent Classification (IPC):
**B64G 7/00** *(2006.01)*      **G09B 9/52** *(2006.01)*
**G09B 9/00** *(2006.01)*      **G09B 9/16** *(2006.01)*
**G09B 9/12** *(2006.01)*

(52) Cooperative Patent Classification (CPC):
**B64G 7/00; G09B 9/00; G09B 9/12; G09B 9/165; G09B 9/52**

(86) International application number:
**PCT/ES2018/070311**

(87) International publication number:
**WO 2019/202178 (24.10.2019 Gazette 2019/43)**

(54) **APPARATUS AND METHOD FOR GENERATING MICROGRAVITY**

VORRICHTUNG UND VERFAHREN ZUM ERZEUGEN VON MIKROGRAVITATION

APPAREIL ET PROCEDE DE PRODUCTION DE MICROGRAVITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2021 Bulletin 2021/08**

(73) Proprietor: **Ingesea Automation SL**
**20870 Elgoibar (ES)**

(72) Inventors:
• **LAVÁN, David**
**Cercado de Lima, Lima, 07001 (PE)**
• **IRIONDO, Ane Miren**
**20870 Elgoibar (ES)**
• **ÁLVARO, Jesús María**
**20870 Elgoibar (ES)**
• **BOLLAR, Asier**
**20870 Elgoibar (ES)**

(74) Representative: **Balder IP Law, S.L.**
**Paseo de la Castellana 93**
**5ª planta**
**28046 Madrid (ES)**

(56) References cited:
WO-A1-2010/150600      CN-Y- 201 120 141
KR-B1- 101 737 048      US-A1- 2006 293 795
US-A1- 2016 103 454      US-A1- 2016 163 218

• A. G. BORST ET AL: "Technology and Developments for the Random Positioning Machine, RPM", MICROGRAVITY, SCIENCE AND TECHNOLOGY, vol. 21, no. 4, 3 September 2008 (2008-09-03), pages 287-292, XP055253872, DE ISSN: 0938-0108, DOI: 10.1007/s12217-008-9043-2

**Description**

**FIELD OF THE INVENTION**

The present invention belongs to the field of systems for generating microgravity, applicable to both organisms or living beings and inert beings, such as different materials.

**BACKGROUND OF THE INVENTION**

Clinostats, also known as Random Position Machines, are machines that consist of regularly rotating an object to cause a constant variation of the gravity vector (specifically, try to minimise the effect of said vector) with respect to a sample around the rotating shaft. Clinostats usually have a single rotating shaft, in which case they make it possible to study responses in the rotation plane, or two rotating shafts, which make it possible to generate a huge amount of experimental conditions. Thus, a series of random forces are applied to the sample to achieve a near-zero level of simulated microgravity. Clinostats may be used, for example, to study the effects of microgravity on cell cultures. Their use is also envisaged in the study of cancer evolution (see for example Becker JL1, Souza GR. Using space-based investigations to inform cancer research on Earth. Nat Rev Cancer. 2013 May; 13(5):315-27), since studies performed in real near-zero-gravity (microgravity) environments have shown to have significant effects at cellular and molecular level (see for example Sahebi R. et al., 2017: The role of microgravity in cancer -a dual edge sword) or in the study of other diseases or alterations experienced by astronauts, associated with the environment in which they live during their space flights (see for example Helder Marcal, Brendan P. Burns, Elizabeth Blaber. A Human Mission to Mars: A Bioastronautics Analysis of Biomedical Risks. Journal of Cosmology, 2010, Vol 12, 3748-3757). The effect of microgravity on the inhibition of troponin has also been described (see Akira Higashibata, Toko Hashizume, Kanako Nemoto, Nahoko Higashitani, Timothy Etheridge, Chihiro Mori, Shunsuke Harada, Tomoko Sugimoto, Nathaniel J Sewczyk, Shoji A Baba, Yoshihiro Mogami, Keiji Fukui & Atsushi Higashitani. Microgravity elicits reproducible alterations in cytoskeletal and metabolic gene and protein expression in space-flown Caenorhabditis elegans. npj Microgravity volume 2, Article number: 15022 (2016) or also Shen H, Lim C, Schwartz AG, Andreev-Andrievskiy A, Deymier AC, Thomopoulos S. Effects of spaceflight on the muscles of the murine shoulder. FASEB J. 2017 Dec;31(12):5466-5477. doi: 10.1096/fj.201700320R. Epub 2017 Aug 17.), marker identified as the cause of the muscle contractions.

Regarding the evolution of cancer, research into cancer cell models confirms that microgravity alters the behaviour of the cells, inducing programmed cell death or apoptosis (Vidyasekar P et al., 2015: Genome wide expression profiling of cancer cell line cultured in microgravity reveals significant dysregulation of cell cycle and MicroRNA gene networks; Pisanu ME et al., 2014: Lung cancer stem cell lose their sternness default state after exposure to microgravity), inhibiting the growth and proliferation of cancer cells (Kim YJ et al., 2017: Time-averaged simulated microgravity (taSMG) inhibit proliferation of lymphoma cells, L540 and HDLM-2, using a 3D clinostat; Zhao T et al., 2016: Simulated microgravity promotes cell apoptosis through suppressing Uev1A/TICAM/TRAF/NIκβ-Regulated anti-apoptosis and p53/PCNA- and ATM/ATR-Chk1/2 -Controlled DNA- damage response pathways) and altering the proteins and genes involved in the cellular cycle, such that microgravity prevents the proliferation of cancer cells and the formation of spherical colonies. A modulating effect of microgravity on gene expression in cancer has also been demonstrated, although this effect varies in accordance with the cancer cell model studied, as revealed by different studies, such as the cited study of Sahebi R. et al. Furthermore, it has been demonstrated that microgravity can increase response to drugs in cancers such as B-cell lymphoma, liver cancer, breast and lung cancer (Mukhopadyay S et al., 2016: A systems biology pipeline identifies new immune and disease-related molecular signatures and networks in human cells during microgravity exposure).

Regarding the effect of the environment on astronauts, studies have been carried out in zero-gravity environments in order to determine the risks to which astronauts are exposed during spaceflight. Space flights have demonstrated that lack of gravity may have effects at different levels, such as: on the cardiovascular system (Otsuka K et al., 2016: Long-term exposure to space's microgravity alters the time structure of heart rate variability of astronauts); on the neurological system (Caprihan A et al., 1999: Effect of headdown tilt on brain water distribution; Kawai Yet al. 2003: Effects of microgravity on cerebral hemodynamics; Iwasaki K, et al. 2007: Human cerebral autoregulation before, during and after spaceflight; Li Ke et al., 2015: Effect of simulated microgravity on human brain gray matter and white matter-evidence from MRI); on the musculoskeletal system (Lang T et al., 2017: Towards human exploration of space-the THESEUS review series on muscle and bone research priorities); and on the immune system (Mudhopadhyay S et al., 2016: A systems biology pipeline identifies new immune and disease-related molecular signatures and networks in human cells during microgravity exposure).

For example, an experiment was carried out in the International Space Station (ISS) in which the gene expression of fruit fly pupae subjected to microgravity was analysed (see Raúl Herranz, Alberto Benguría, David A. Laván, Irene López-Vidriero, Gilbert Gasset, F. Javier Medina, Jack J. W. A. Van Loon, and Roberto Marco. "Spaceflight-related suboptimal conditions can 5 accentuate the altered gravity response of Drosophila transcriptome". Molecular Ecology.

Volume.: 19 pp (4255 - 42664). 31/108/2010, Raúl Herranz, David A. Laván, F. Javier Medina, Jack J. W. A. van Loon and Roberto Marco. "Drosophila Gene Experiment in the Spanish Soyuz Mission to the ISS: II Effects of the Containment Constraints" Microgravity Science and Technology. Volume 21 pp 10 (299 - 304) 04/11/2009. Netherlands, Herranz, R. Lavan, D.A. Benguria, A. Duque, P. Leandro, L.J. Gasset, G. Medina, F.J. van Loon, J. Marco, R. "Gene" Experiment in the Spanish Soyuz Mission to the ISS. Effects of the cold transportation step". Microgravity Science and Technology. Volume: 19 pp (196 - 200) 2007. Netherlands, L.J. Leandro, N.J. Szewczyk, A. Benguría, R. Herranz, D. Laván, F.J. Medina, G. Gasset, J. van Loon, C.A. 15 Conley and R. Marco. "Comparative analysis of Drosophila melanogaster and Caenorhabditis elegans gene expression experiments in the European Soyuz flights to the International Space Station" Advances in Space Research). The experiment was carried out applying previous cold treatment at 14°C during the crawling stage. The stage subjected to microgravity was performed at 23°C.

The main problem of carrying out experiments in microgravity conditions is the difficulty and high cost of the development and execution of the experiments in such conditions, to which end a satellite in orbit or the facilities of the International Space Station (ISS) are required (see for example Setlow RB, 2003: The hazards of space travel; or Herranz R et al., 2013: Ground-based facilities for simulation of microgravity-organism-specific recommendations for their use, and recommended terminology). To overcome this problem, different types of microgravity simulators have been developed, such as the 3-D Clinostat, which has two degrees of freedom obtained by means of two rotating shafts placed at right angles. The rotation, generated by two motors, is controlled by means of encoders connected to a computer. This clinostat is also described, for example, in addition to in the cited reference of Herranz R et al., in van Loon, 2007: Some history and use of the random positioning machine, RPM, in gravity-related research; and in Wuest SL et al., 2015: Simulated gravity - critical review on the use of random positioning machines for mammalian cell culture. In turn, Jack J.W.A. van Loon has described the relationship between the average angular speed of a rotating shaft of a clinostat and the effective gravity obtained at a certain distance from the centre thereof (see Jack J.W.A. van Loon. Some history and use of the random positioning machine, RPM, in gravity-related research. Advances in Space Research. Volume 39, Issue 7, Pages 1161-1165).

Patent application US2016/0103454A1 discloses an apparatus for controlling the gravity formed by two rotating frames or structures disposed on a support. One of the frames is disposed in the internal space defined by the other frame. Each frame rotates along a respective shaft, wherein said shafts are orthogonal therebetween.

Patent application US2016/0163218A1 discloses an apparatus for simulating rotational dynamics with three degrees of freedom in spacecraft without limit in the maximum possible rotation angle due to an external gimbal structure in whose interior a load and spherical air bearing which can rotate freely in $4\pi$ steradians are introduced.

Patent application US2003/041800A1 discloses an apparatus for simulating microgravity in cell samples and cultures, based on two frames or structures in whose interior a receptacle housing the sample is disposed. Each frame rotates around a shaft, thereby rotating the receptacle with the sample. The apparatus makes it possible to provide a fluid supply to the samples during microgravity simulations.

One of the drawbacks observed in the conventional clinostats used to apply microgravity to a body, particularly a living body, is related to the effects of microgravity on living beings with high mass, since the greater the mass, the higher the speed required to feel the effect of microgravity (see for example Hoson T1, Kamisaka S, Masuda Y, Yamashita M, Buchen B. Evaluation of the three-dimensional clinostat as a simulator of weightlessness. Planta. 1997;203 Suppl:S187-97). Also, the effect of microgravity differs in accordance with the size of the living being, since small living beings adapt more easily than more complex beings, as reported, for example, by Anken R, 2013; Simulation of microgravity for studies in gravitational biology - Principles, apparatuses and applications. The concept of fast-rotating clinostats was introduced by Briegleb (Briegleb W, 1992: Some qualitative and quantitative aspects of the fast-rotating clinostat as a research tool) to achieve functional weightlessness in small objects, mainly individual cells, and cited by Herranz et al. in the aforementioned publication. This concept was subsequently corroborated, for example, by Klaus DM et al. (Klaus DM et al., 2001: Functional weightlessness during clinorotation of cell suspensions).

Another drawback observed in conventional clinostats used to apply microgravity to living beings is their tendency to adapt to the microgravity generated by the clinostat. In other words, rotation predictability in conventional clinostats makes living organisms subjected to microgravity in these clinostats tend to become stabilised, losing the effect of microgravity. When this happens, it is necessary to manually vary the operating parameters or even restart the machine to destabilise the sample again. Additionally, it has been observed that the larger the size of the sample subjected to the effects of the clinostat, the greater the capacity of the sample to adapt to the forces generated to eliminate the effect of gravity. This process of adaptation to microgravity in living organisms over time has been demonstrated in various studies (Uva BM et al., 2002: Microgravity-induced apoptosis in cultured glial cells. Eur. J. Histochem; Thiel Cora S. et al., 2017: Rapid adaptation to microgravity in mammalian macrophage cells. Scientific Reports; Kordyum EL, 2014: Plant cell gravisensity and adaptation to microgravity. Plant Biology). "Technology and Developments for the Random Positioning Machine, RPM", by A. G. BORST ET AL, MICROGRAVITY, SCIENCE AND TECHNOLOGY, vol. 21, no. 4, 3 September 2008 (2008-09-03), pages 287-292 also discloses clinostats.

Therefore, there is a need to achieve a clinostat that provides a constant level of microgravity and in turn gives the sample (for example, a living organism) subjected to the effects of the clinostat enough instability to prevent said sample from assimilating the forces supported and to prevent that the effect of gravity reappears. In other words, a clinostat in which this instability can be applied continuously is required. Additionally, there is a need to achieve a clinostat that not only provides a sample with a constant level of microgravity and enough instability to maintain the level of microgravity, but that can also be applied to samples of a larger size that achieved using conventional clinostats.

**DESCRIPTION OF THE INVENTION**

The present disclosure provides a new apparatus and method for generating microgravity which aim to overcome the drawbacks of the apparatuses and methods for generating microgravity of the state of the art.

The invention provides a mechatronic system with N degrees of freedom, N being a natural number greater than 2 (N>2), which generates microgravity environments. The mechatronic system is physically structured as a three-dimensional (3D) clinostat. The mechatronic system comprises N rotating shafts that provide the N degrees of freedom. The N rotating shafts are independently controlled by actuation means, such as motors. The rotation of these shafts gives rise to a constant and stable level of simulated microgravity (near-zero, for example a level lower than G/100, such as lower than G/1000, or lower than $G/10^4$, or lower than $G/10^5$, or lower than $G/10^6$ or lower than $G/10^7$) in a central area of the mechatronic system (also referred to hereinafter as a machine or apparatus for generating microgravity). In the context of the present disclosure, degrees of freedom is understood to be the minimum number of independent generalized speeds required to define the kinematic state of the mechanism or mechanical system. The term "generalized" makes reference to the coordinates, such as speeds, for example angular speeds, that describe the state of the system to which reference is made. The number of degrees of freedom coincides with the necessary number of equations to describe the movement.

The sample to be subjected to simulated microgravity is housed in the central area of the apparatus. This central area, where the level of microgravity is constant and stable, is variable in accordance with the dimensions of the apparatus. The central space of the apparatus has the capacity to house bodies, such as living beings or objects. In embodiments of the invention, the apparatus is designed to house human beings, in which case it has a load capacity (mass of the sample) greater than 50 kg, such as greater than 75 kg or greater than 100 kg, up to around 150 kg. Maximum load capacity is determined by the mechanical structure and the motors (for example, their power), which must be chosen and dimensioned in accordance with the load to be housed and subjected to microgravity. This central space intended for housing living beings or objects may be implemented by means of different configurations, such as by means of a seat, mainly in the event of housing a human being, or by means of tools for fixing equipment or parts.

The sample or body to be subjected to microgravity in the mechatronic system may be a living being or an inert being. Non-limiting examples of living beings that may be housed in the mechatronic system of the present disclosure are human beings, animals, plants, microorganisms, different cell models, etc. The mechatronic system of the present disclosure is especially advantageous for subjecting living beings to microgravity, due to its capacity to continuously provide a constant level of microgravity and enough instability to the sample subjected to the effects of the clinostat, thereby preventing the sample from assimilating the forces supported so the effect of gravity reappears.

The apparatus for generating microgravity is composed by mechanical elements, such as a support structure, a plurality of rings, frames or rotating bodies and one or more rotation means and couplings that provide N degrees of freedom by means of N rotating shafts (N>2). The apparatus may also include one or more encoders and/or protection elements, among other mechanical elements. The apparatus is also formed by electrical/electronic elements. By way of example, it includes one or more motors (for example, as many as required to move the rings or frames that determine the rotating shafts), motor gears, sensors, processing means, such as microprocessors, a control system based, for example, on PLCs, and communication means for data/information exchange, among other elements. The inclusion of sensors makes it possible to gather data during the use of the apparatus. The apparatus may also include storage means, such as memories, for example to provide support to the processing means, storing software with instructions that are executed in the processing means.

In embodiments of the invention, the mechatronic system is implemented by means of N=3 rotating shafts, which guarantees N=3 degrees of freedom. The degrees of freedom can be increased by increasing the number of rotating shafts, for example by increasing the number of rings or frames and rotation means, for example to N=4 (using four rings and one or more motors to make it rotate), to N=5 (using another additional ring and one or more motors to make it rotate) or to N=6 (using another additional ring and one or more motors to make it rotate).

The movement of each of the rotating shafts of the system is controlled by control means that include software (set of computer programs and instructions) housed in a processing means, which may be attached to the mechatronic system or remote with respect thereto. That is, the control means of the machine comprise processing means in which said software is executed. The control means further comprise storage means, such as memories, for example to provide support to the processing means, storing software with instructions that are executed in the processing means.

The apparatus for generating microgravity may also include a management system for, inter alia, identifying the body, object or living being that will be subjected to microgravity, in order to align it with its process and monitor it continuously; and/or for parameterising the operation of the apparatus (start, stop, operating criteria, safety-in-use criteria, etc.); and/or for the technical and operational configuration of the system (for example, algorithms and hidden functional management); and/or for offering a platform or user interface that provides services, such as remote support and monitoring (for example in real time) and/or intelligent process and data management, inter alia. A control panel (user interface) may be controlled remotely in real time. In embodiments of the invention, the control panel has automated start and stop orders when any of the acquired values reaches the previously calculated levels marked as limit levels.

The rotation movement generated enables the object or organism to be studied to rotate in all directions. In embodiments of the invention, in accordance with the need and capacity of the sample, control logics can be executed to limit said rotation to a maximum number of degrees of inclination. For example, in the case that the body housed in the apparatus is a person, in accordance with the application, the inclination to which the cabin where the person is housed is subjected can be limited. For example, the inclination can be limited so that the person is never placed upside down. For example, depending on the person's age and state of health, the inclination of any of the rotating shafts can be limited to a maximum of 90° with respect to the vertical. Alternatively, the inclination can be limited in any of the rotating shafts to a maximum of 150° with respect to the vertical, for example to a maximum of 120° or to a maximum of 100°. This rotation is generated by the force of the motors coupled to the machine, whose torques are sufficient to mobilise the whole structure of the machine, including the sample or body (living being or object) placed in the centre thereof. A control panel (user interface) that can be controlled remotely in real time may be used to facilitate the control of the rotation movement, speed and direction of rotation of each of the rotating shafts.

As mentioned earlier, the apparatus for generating microgravity is designed to house different objects and living beings which, with the system in operation, rotate around N rotating shafts (N>2), subjected to controlled gravity values in a substantially constant manner and with a sufficient degree of instability applied continuously. The objects and living beings are therefore subjected to various processes or activities in accordance with different aspects, such as the level of gravity to be applied to the object or living being or the time of exposure to microgravity. These activities may vary in nature, always seeking the effect generated by gravity or the absence thereof on the objects or living beings. In accordance with the activity and characteristics of the being to be subjected to said activity, an operating protocol specific to each situation will be designed. Examples of these activities are: scientific research related to the effect of microgravity on living beings and objects; therapeutic treatments applied to living beings; or training and leisure activities for living beings. Additionally, especially when the machine houses living beings to be subjected to the effect of gravity or the absence thereof, an instability effect is applied in order to prevent said living beings from adapting to the simulated microgravity generated by the apparatus.

In accordance with the application given to the apparatus for generating microgravity, it may include other necessary elements for said application, such as microscopes, for example fluorescence microscopes, elements for favouring the execution of mobility exercises within the machine itself, molecular biology equipment, such as real-time PCR, optical tweezer equipment to measure the effects of protein elongation and, due to the dimensions of the microgravity machine of the present disclosure, any other equipment required to carry out research.

In a first aspect of the present disclosure, an apparatus to generate microgravity is provided, comprising a first rotating body configured to rotate around a first shaft through the actuation of first actuation means, a means for housing a sample, the means being circumscribed in the first rotating body and connected to the first rotating body, a second rotating body configured to rotate around a second shaft through the actuation of second actuation means, the first rotating body being disposed in the interior of a volume delimited by the second rotating body when it rotates around said second shaft and connected to the second rotating body, and a third rotating body configured to rotate around a third shaft through the actuation of third actuation means. The second rotating body is disposed in the interior of a volume delimited by the third rotating body when it rotates around a third shaft and connected to the third rotating body. The first, second and third actuation means are independent from each other, the rotation of each shaft being independent from the rotation of the other shafts. The rotation of said rotating bodies generates a level of simulated microgravity in said means to house a sample. The apparatus further comprises a processing means configured to control the rotation of each of said shafts through the application, in each of said shafts, of a pseudo-random value of rotation speed that varies between a minimum value $v_{min\_i}$ and a maximum value $v_{max\_i}$ previously established for each shaft i, during a pseudo-random time value that varies between a minimum value $t_{min\_i}$ and a maximum value $t_{max\_i}$ previously established for each shaft i. This provides an instability effect to prevent the sample housed in said means from adapting to the simulated microgravity generated by the apparatus. This is especially significant in the case that the sample is a living being.

In embodiments of the invention, in each shaft, said minimum value $v_{min\_i}$ is determined as a percentage of an average angular speed, wherein said average angular speed is obtained based on a desired level of microgravity and a distance with respect to the centre of said means at which said desired level of microgravity must be achieved.

In embodiments of the invention, the first, second and third rotating bodies are supported by a fixed structure disposed on a reference surface.

In embodiments of the invention, the means for housing a sample is a seat for a person to seat in the central part of the apparatus.

In embodiments of the invention, the processing means is configured to limit the inclination of each of the shafts with respect to the vertical, at a predetermined maximum inclination degree value. This option will depend on the sample housed in the apparatus. In the case of persons it will depend, for example, on the application for which the apparatus is used and/or on the person's age and state of health.

In embodiments of the invention, the pseudo-random value of rotation speed of each of said shafts is calculated as follows, for each shaft i: Shaft i rotation speed $v_i$ (Rpm) = $(v_{max\_i} - v_{mi\_i})$*rand() + $v_{min\_i}$, wherein *rand()* is a function that generates a real pseudo-random value between 0.0 and 1.0, $v_{max\_i}$ is the maximum rotation speed in shaft i and $v_{min\_i}$ is the minimum rotation speed in shaft i; and said pseudo-random time value during which each shaft i rotates at the calculated rotation speed, is calculated as follows: Time for speed-change in shaft i $t_i$ (s) = $(t_{max\_i} - t_{min\_i})$*rand() + $t_{min\_i}$, wherein *rand()* is the same previous function, $t_{max\_i}$ is the maximum time for rotation speed-change in shaft i and $t_{min\_i}$ is the minimum time for rotation speed-change in shaft i.

In this manner, the random angular speed values can be chosen for certain microgravity values, for a position with respect to the centre of the system.

In embodiments of the invention, the processing means is configured to control the direction of rotation of each of said shafts through the application of a change in direction in each shaft i whenever a time elapses, whose value is a pseudo-random value that varies between a minimum value *t_Dir min_i* and a maximum value *t_Dir max_i* previously established for each shaft i. This pseudo-random time value for applying a change in direction in each of said shafts can be calculated as follows, for each shaft i: *t_Dir_i* = (*t_Dir_max_i* - *t_Dir-min-i*)* rand() + *t_Dir_min_i,* wherein *rand()* is a function that generates a real random or pseudo-random value between 0.0 and 1.0, *t_Dir_max_i* is the maximum time for direction-change in shat i and *t_Dir_min_i* is the minimum time for direction-change in shaft i, wherein said change in direction gives rise to a new calculation of rotation speed in shaft i $v_i$ and a new calculation of time for a change in speed $t_i$.

In embodiments of the invention, the processing means is configured to impose a maximum time value in which a shaft i rotates at a same speed.

In embodiments of the invention, the apparatus comprises a control panel configured to control at least one of the following parameters: speed of each of the rotating shafts $v_i$, direction of movement of each rotating shaft and maximum time value during which a shaft i rotates at a same speed ti.

In a second aspect of the present disclosure, a method is provided, to generate simulated microgravity by means of an apparatus comprising a first rotating body configured to rotate around a first shaft, through the actuation of first actuation means; a means for housing a sample, the means being circumscribed in the first rotating body and connected to the first rotating body; a second rotating body configured to rotate around a second shaft through the actuation of second actuation means, the first rotating body being disposed in the interior of a volume delimited by the second rotating body when it rotates around said secondary shaft and connected to the second rotating body; and a third rotating body configured to rotate around a third shaft through the actuation of third actuation means, the second rotating body being disposed in the interior of a volume delimited by the third rotating body when it rotates around the third shaft and connected to the third rotating body, said first, second and third actuation means being independent from each other. The method comprises: making said first, second and third rotating bodies rotate around said shafts through the independent actuation of said first, second and third actuation means; controlling the rotation of each of the shafts through the application, in each of said shafts, of a pseudo-random value of rotation speed $v_i$ that varies between a minimum value $v_{min\_i}$ and a maximum value $v_{max\_i}$ previously established for each shaft i, during a pseudo-random time value $t_i$ that varies between a minimum value $t_{min\_i}$ and a maximum value $t_{max\_i}$ previously established for each shaft i.

In embodiments of the invention, for each shaft, the minimum value of rotation speed $v_{min\_i}$ is obtained as follows: calculating an angular speed at which said shaft must rotate to achieve a certain level of microgravity at a certain distance with respect to the centre of said means, and calculating a percentage of said angular speed, said percentage being the minimum value *vmin_i.*

In embodiments of the invention, the pseudo-random value of rotation speed of each of said shafts is calculated as follows, for each shaft i: rotation speed for shaft i vi (Rpm) = $(v_{max\_i} - v_{min\_i})$*rand() + $v_{min\_i}$, wherein *rand()* is a function that generates a real pseudo-random value between 0.0 and 1.0, $v_{max\_i}$ is the maximum rotation speed for shaft i and $v_{min\_i}$ is the minimum rotation speed for shaft i; and the pseudo-random time value during which each shaft i rotates at the calculated rotation speed is calculated as follows: time for speed change in shaft i $t_i$ (s) = $(t_{max\_i} - t_{m/n\_i})$*rand() + $t_{min\_i}$, wherein *rand()* is the same previous function, $t_{max\_i}$ is the maximum time that must elapse to change the speed of the shaft i, maintaining the rotation direction of the shaft i, and $t_{min\_i}$ is the minimum time that must elapse to change the speed of the shaft i, maintaining the direction of rotation of the shaft i.

In embodiments of the invention, the method further comprises controlling the direction of rotation of each of said shafts by applying a change in direction of each shaft i whenever a time elapses, whose value is a pseudo-random value that varies between a minimum value *t_Dir min_i* and a maximum value *t_Dir max_i* previously established for each shaft i.

In embodiments of the invention, the pseudo-random time for applying a change in direction in each of said shafts is calculated as follows, for each shaft i: $t\_Dir\_i = (t\_Dir\_max\_i - t\_Dir\_min\_i)* \mathrm{rand}() + t\_Dir\_min\_i,$ wherein *rand()* is a function that generates a real random or pseudo-random value between 0.0 and 1.0, $t\_Dir\_max\_i$ is the maximum time for direction-change in shaft i and $t\_Dir\_min\_i$ is the minimum time for direction-change in shaft i, wherein said change in direction gives rise to a new calculation of rotation speed in shaft i and a new calculation of time for applying a change in speed.

One of the applications of the apparatus for generating microgravity of the present disclosure is in the therapeutic treatment of cancer, given the capacity of the apparatus to inhibit cancer cells through the creation of the microgravity environment, since the simulated microgravity causes apoptosis of cancer cells through the inhibition of the gene expression of the genes responsible for tumour development. That is, the apparatus of the present disclosure provides a microgravity environment that favours the inhibition of proteins marked as tumour regulators.

Another application of the apparatus for generating microgravity of the present disclosure is in the therapeutic treatment of muscle injuries, given the capacity of the apparatus to relax muscles due to the inhibition of troponin, marker identified as causing muscle contractures. That is, the apparatus of the present disclosure provides a microgravity environment that favours the inhibition of proteins generating muscle contractures and injuries.

Another application of the apparatus for generating microgravity of the present disclosure is in the field of leisure and free time, given its capacity to give the user a feeling of weightlessness. In embodiments of the invention, the apparatus is combined with virtual reality equipment for the user to enjoy an exciting experience, combining the sensation of weightlessness with virtual reality.

Additional advantages and features of the invention will be evident from the detailed description below and will be particularly indicated in the attached claims.

**BRIEF DESCRIPTION OF THE FIGURES**

As a complement to the description being made, and for the purpose of helping to make the characteristics of the invention more readily understandable, in accordance with an example of practical embodiment thereof, said description is accompanied by a set of drawings constituting an integral part thereof which, by way of illustration and not limitation, represent the following.

Figure 1A shows a front view of a scheme of a mechatronic system for generating microgravity according to a possible embodiment of the invention.

Figure 1B shows a side view of a scheme of a mechatronic system for generating microgravity of Figure 1A.

Figure 1C shows a side view of a scheme of a mechatronic system for generating microgravity of Figures 1A-1B, in a rotation position.

Figure 2 shows a schematic view of the platform or fixed structure that supports the rotating bodies of the mechatronic system of Figures 1A-1C.

Figure 3 shows a parameter that represents the maximum time in seconds that a shaft actuated by one or more motors is allowed to rotate at a same, previously calculated speed. This speed is obtained after an acceleration/deceleration time.

Figure 4 shows a graph representing the microgravity levels experimentally obtained, in accordance with the distance with respect to the central point of the machine and with the angular speed applied.

Figures 5A-5D show an experiment carried out using a machine of the invention. It is the crystallisation of potassium nitrate under microgravity.

**DESCRIPTION OF A PRACTICAL EMBODIMENT OF THE INVENTION**

The following description should not be considered in a non-limiting sense, but rather is only provided for the purpose of describing broad principles of the invention. The following embodiments of the invention will be described by way of example, with reference to the aforementioned figures, which show apparatuses and results in accordance with the invention.

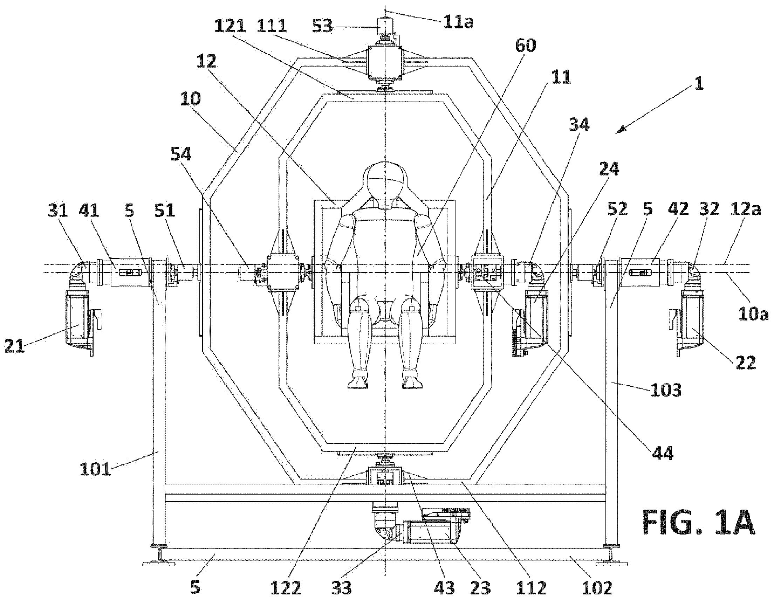

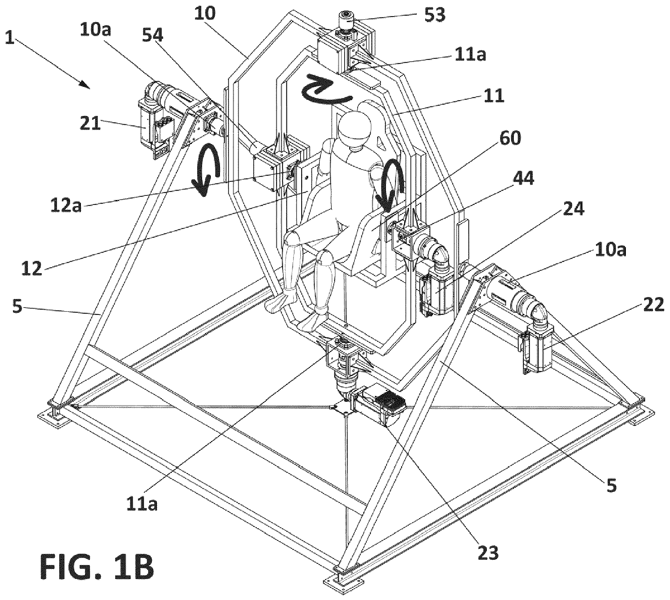

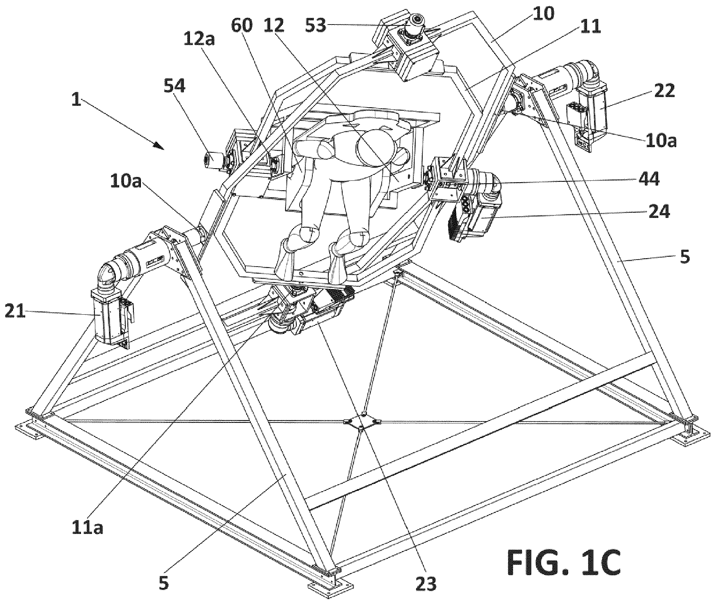

The diagrams shown in Figures 1A-1C represent some of the elements of a system or apparatus for generating microgravity 1 in accordance with an embodiment of the invention. The system 1 comprises a first rotating body or frame 10 configured to rotate around a first shaft 10a, a second rotating body or frame 11 configured to rotate around a second shaft 11a and a third rotating body or frame 12 configured to rotate around a third shaft 12a. As can be observed, in this embodiment, at rest, the first shaft 10a coincides with the third shaft 12a. That is, the three rotating shafts 10a, 11a, 12a are independent from each other, but the first shaft 10a and the third shaft 12a are aligned at rest. The movement of each shaft is independent from the movement of the other two shafts. The rotating bodies 10, 11, 12 are supported by a fixed structure or platform 5 disposed on the reference floor or surface. A means for housing the sample or body to be subjected to microgravity is circumscribed in the third rotating body or frame 12. In the implementation shown, the means for housing the sample is a means 60 adequate for a person to seat in the central part of the apparatus 1 in order to be subjected to the microgravity generated by the apparatus 1. The means 60 is, for example, but in a non-limiting manner, a seat 60. In the case that the sample is not a person, the means for housing the sample is replaced with another means adequate to the sample, such as fastening means, a support, a closed container or other. In Figure 1, the seat 60 is anchored to the third rotating body 12 by coupling means.

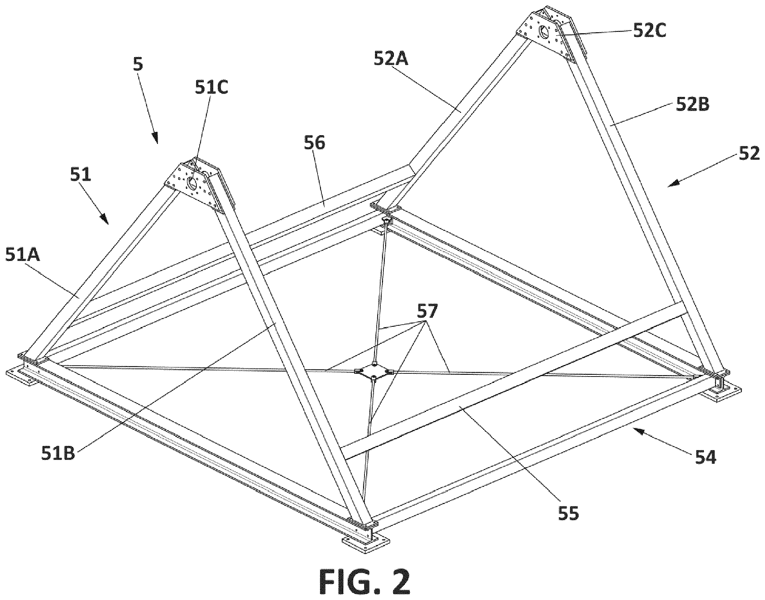

Figure 2 shows in detail the fixed structure or platform 5 according to a possible implementation of the invention. The structure 5 has two inverted V-shaped parallel pieces 51, 52. In each piece 51, 52, each rod or element 51A, 51B, 52A, 52B formed by the inverted V is joined by one end to the other rod or element formed by the respective inverted V. This connection is implemented by means of an element 51C, 52C, which in the implementation shown is a trapezoidal piece. The fixed structure or platform 5 also has a piece 54 designed to rest on the floor or support surface. Each of the four lower ends of the assembly formed by the two pieces 51, 52 (i.e. each free end of the rods or elements 51A, 51B, 52A, 52B) rests on or is connected to a respective vertex of the four vertices of the piece 54 disposed on the floor (or support surface). This piece 54 is formed by four parallel sides, two by two. The structure 5 shown also has two crossbeams 55, 56 parallel to each other and to the support surface. Each crossbeam 55, 56 connects an inclined element of the piece 51 to the respective inclined element of the piece 52. The structure 5 may also include bars 57 to give structural resistance to torsion. Each of the four bars 57 shown has an end connected to one vertex of the four vertices of the piece 54. The other end of each bar 57 is connected to the other end of the other three bars.

Returning to Figures 1A-1C, the first rotating body 10 is formed by a set of elongated elements that form a closed perimeter. In this embodiment, the elongated elements form an octagonal perimeter, although other different perimeter shapes are possible. The first rotating body 10 rotates around the rotating shaft 10a actuated by actuation means, such as one or more motors. In the embodiment shown, two motors (or servomotors) 21, 22, rotate the first rotating body 10 around the rotating shaft 10a. The motors 21, 22 are disposed on opposite ends of the rotating shaft 10a. The motors 21, 22 operate simultaneously. In this embodiment two motors 21, 22 have been used for mechanical reasons. The motors 21, 22 act on the rotating body 10, rotating it on the rotating shaft 10a in any of the two directions (in figure 1B an arrow indicates one of the two possible directions of rotation). Other elements of the first rotating body 10 are motor gears 31, 32 to vary the torque of the respective motor, elastic couplings 41, 42 to absorb vibrations and electrical collectors 51, 52. With this structure, when the actuation means 21, 22 of the first rotating body 10 are actuated, the first rotating body 10 rotates around the first rotating shaft 10a. In other embodiments of the invention, the first rotating body 10 may have a single motor, disposed on one of the ends of the rotating shaft 10a. This is possible when the apparatus for generating microgravity is designed for applications in which the sample has a low or moderate weight, such as for example in the case of microorganisms, cells or plants or small animals. In the implementation shown, designed to house persons, the exterior shaft 10a, which supports the greatest weight, has two motors 21, 22 that operate simultaneously.

The second rotating body or frame 11 is configured to rotate around a second rotating shaft 11a perpendicular to the first rotating shaft 10a. In the embodiment shown, the second rotating body 11 is formed by a set of elongated elements that form a closed perimeter. In this embodiment, the elongated elements form an octagonal perimeter, although other perimeter shapes are possible. The second rotating body 11 is smaller than the first rotating body 10, such that the second rotating body 11 is circumscribed in the first rotating body 10 or disposed in the interior of a volume defined by the first rotating body 10 when it rotates actuated by the corresponding actuation means. The second rotating body 11 is connected to the first rotating body 10 by means of a first coupling implemented by means of electrical collectors 53 (and elastic couplings, shafts and bearings) that connect one side 121 of the second rotating body 11 to one side 111 of the first rotating body 10 and a second coupling by means of electrical collectors that connect another side 122 of the second rotating body 11 to another side 112 of the first rotating body 10. These couplings connect or fasten the first rotating body 10 and the second rotating body 11 to each other but allow the bodies 10, 11 to rotate on their respective shaft. The electrical collectors enable the necessary rotation degrees. The electrical collectors make it possible to carry electrical signals that may be required, for example by means of a fieldbus with the corresponding wiring. The aforementioned electrical signals may serve to power the shafts in order for them to reach the required speed and calculated by the control software, as explained below, or to carry monitoring sensor signals, etc.

The second rotating body 11 rotates around the rotating shaft 11a actuated by actuation means, such as one or more motors or servomotors. In the embodiment shown, a motor 23 disposed next 122 to the rotating body 11 rotates the second rotating body 11 around the rotating shaft 11a in any of the two directions (in figure 1B an arrow indicates one of the two possible directions of rotation). The motor 23 is disposed on the rotating shaft 11a. Other elements of the second rotating body 11 include a gear 33 of the motor 23 and an elastic coupling 43. Thus, the second rotating body 11 rotates around the second rotating shaft 11a when the actuation means 23 are actuated.

The third rotating body or frame 12 is configured to rotate around a third rotating shaft 12a independent from the first rotating shaft 10a and from the second rotating shaft 11a. In the embodiment shown, the third rotating body 12 is formed by a set of elongated elements that form a closed perimeter. The elongated elements form a square or rectangular perimeter, although other different perimeter shapes are possible. The third rotating body 12 is smaller or occupies a smaller volume than the second rotating body 11, such that the third rotating body 12 is circumscribed in the second rotating body 11 or disposed in the interior of a volume defined by the second rotating body 11 when it rotates actuated by the corresponding actuation means. The third rotating body 12 is connected to the second rotating body 11 by means of elastic couplings 44 and electrical collectors 54, shafts and bearings on opposite sides of the perimeter of the third rotating body 12. The electrical collectors 54 allow signals to pass from one rotating body to another. Additionally, counterweights may also be included to balance weights with the motor disposed on the other side.

The third rotating body 12 rotates around the rotating shaft 12a actuated by actuation means, such as one or more motors or servomotor. In the embodiment shown, upon actuating a motor 24 disposed on the rotating shaft 12a, the motor 24 rotates the third rotating body 12 around the rotating shaft 12a in any of the two directions (in Figure 1B an arrow indicates one of the two possible directions of rotation). Other elements of the third rotating body 12 include a gear 34 of the motor 24 and electrical collectors 54 (and couplings, shafts and bearings). Thus, when the actuation means 24 rotate, the third rotating body 12 rotates around the third rotating shaft 12a. That is, each rotating body 10, 11, 12 rotates along a respective shaft 10a, 11a, 12a independently. In general, the shaft 10a is orthogonal to the shaft 11a and the shaft 11a is orthogonal to the shaft 12a. This rotation is generated through the force of the motors coupled to the machine, whose torques are sufficient to mobilise the entire structure of the machine, including the sample (living being or object) placed in the central area thereof. Since the apparatus 1 shown has N=3 rotating shafts 10a, 11a, 12a which are controlled independently by means of motors, N=3 degrees of freedom are achieved. Upon rotating the third rotating body 12, the seat 60 connected to the body 12 also rotates, such that the person occupying the seat 60 is subjected to a series of random forces to achieve a near-zero level of simulated microgravity. That is, due to the rotation movement generated, the person sitting on the seat 60 rotates in all directions. The independent motors can be rotated by moving each shaft separately or all the motors can be rotated simultaneously so that the person rotates in any position. Shaft rotation is generated through the force of the motors coupled to the machine, whose torques are sufficient to mobilise the entire structure of the machine, including the sample or body (living being or object) disposed in the central area.

The mechatronic system also has control means, not shown, formed by a set of processing means and ancillary elements, such as memory storage means. Any processor or set of processors having adequate response capacity, such as a central processing unit or at least one central processing core, a graphic processing unit, a FPGA (Field-Programmable Gate Array) or an embedded circuit (for example, a System-on-Chip or a Multiprocessor System-on-Chip) or a combination of the foregoing, may be used as processing means. The processing means may be attached to the mechatronic system 1 or remote with respect thereto. In addition to processing means, the machine control means further comprise storage means, such as memories, for example to give support to the processing means. The mechatronic system also has a user interface (control panel) that enables communication with the control means to control the operation of the system by programming and selecting work parameters. That is, the rotation movement, speed and direction of rotation of each of the rotating shafts can be controlled through the user interface, so as to obtain constant and stable microgravity values at a programmed or selected level. For example, if a desired microgravity value of $G*10^{-7}$ is established, the sample housed in the mechatronic system will always be subjected to that level of microgravity during the session in the system. If, on the contrary, a desired level of microgravity of $G*10^{-4}$ is established, the sample housed in the mechatronic system will always be subjected to that level of microgravity during the session in the system.

The desired microgravity value to be obtained and the distance from the centre of the system 1 at which said level of microgravity must be obtained can be indicated through the user interface, for example using a keyboard. The system, by running software embedded in the processing means, calculates the angular speed that must be imposed on each rotating shaft 10a, 11a, 12a based on the desired microgravity value and the distance from the centre of the means 60 for housing the sample, such as a seat. Alternatively, the angular speed that must be reached by each rotating shaft 10a, 11a, 12a can be indicated through the user interface, such that the system, by running the software embedded in the process media, can calculate and inform the user, through the control interface, of the microgravity value that will be obtained at different distances from the centre of the means 60 for housing the sample.

The following formula relates the average angular speed to the microgravity obtained at a certain distance from the centre of the system:

$$g_{ef} = \left(\frac{3W^2R}{g}\right)g$$

where $g_{ef}$ is the effective gravity measured in gravity (g) on the rotating platform (system of Figures 1A-1C) or microgravity at a distance R from the centre of the platform (system of figures 1A-1C), W is the average angular speed, which is the same for each rotating shaft. Effective gravity $g_{ef}$ is represented as a number of times g (for example, 0.00012 g).

In this manner the control system calculates the necessary angular speed in each rotating shaft to achieve that effective gravity at that distance by selecting the desired effective gravity value $g_{ef}$ and the distance R from the centre of the system. Or, by selecting a certain angular speed for the rotating shafts, the control system can display, for example graphically on a screen, the microgravity values that can be obtained in accordance with the distance to the centre of the system.

This control can be performed remotely and in real time. These parameters create a system for changing the speed of the motors and, therefore, of the rotating shafts 10a, 11a, 12a which, as described below, is unstable and random. That is, to control the spin or rotation speed of each of the rotating shafts 10a, 11a, 12a and the direction of spin or rotation (clockwise or anti-clockwise) thereof, a control panel (user interface), not shown, can be used which can be controlled remotely in real time. The control system, such as central control, for example PLC, is capable of calculating average motor speed values for a given microgravity value. Alternatively, it is capable of calculating the microgravity value for angular speeds introduced via a keyboard. The control system calculates the movements that each shaft 10a, 11a, 12a must perform by means of logical instructions and function blocks implemented in the control system, such as PLC. These instructions control the servomotors in the machine. The position of each shaft is controlled by means of encoders integrated in each servomotor, which send the information to the control system (PLC) (it is a closed loop). The control system (PLC) sends a position, speed, acceleration and rotation direction parameter, and the servomotor executes these movements.

In the implementation shown in Figures 1A-1C, intended for subjecting a person to microgravity, control logics can be executed to limit the rotation to a maximum number of degrees of inclination, for example to prevent the person from being placed upside down. For example, the inclination can be limited in any of the rotating shafts 10a, 11a, 12a to a maximum of 90° with respect to the vertical, or to a maximum of 100° with respect to the vertical, or to a maximum of 120° with respect to the vertical. The maximum inclination will vary in accordance with, inter alia, the application; for example, if the apparatus is used for leisure and enjoyment, greater inclination can be applied than in the case of therapeutic treatments. The rotation of these shafts 10a, 11a, 12a creates a constant and stable level of simulated microgravity (near-zero) in a central area of the mechatronic system 1, i.e. in the area occupied by the seat 60.

Furthermore, when the apparatus 1 houses living beings to be subjected to the effect of gravity or the absence thereof, the system applies an instability effect to prevent said living beings from adapting to the simulated microgravity generated by the apparatus. The way in which this instability is achieved is explained below. As in the control logic related to the angular speed of the shafts to achieve a certain level of microgravity, the control logic related to the instability effect is implemented by means of software (set of computer programs and instructions) housed in the aforementioned processing means.

The instability is generated as of a series of parameters controlled by the control means of the apparatus 1. These parameters create an unstable and random speed-change system. The parameters are as follows, for each rotating shaft 10a, 11a, 12a (in general, shaft i) associated with a respective rotating body 10, 11, 12:

Maximum rotation speed of the motor or motors of the shaft i (°/s): $v_{max\_i}$
Minimum rotation speed of the motor or motors of the shaft i (°/s): $v_{min\_i}$
Note that the movement of each rotating shaft i (shafts 10a, 11a, 12a) is independent from the movement of the other shafts.
Maximum time for changing the rotation speed of the motor or motors of a shaft i (s): $t_{max\_i}$
Minimum time for changing the rotation speed of the motor or motors of a shaft i (s): $t_{min\_i}$

In general, the maximum and minimum time for changing rotation speed is different in each shaft i. However, the same maximum value may be established for several or all the shafts and the same minimum value may be established for several or all the shafts. Note that, even if the same maximum value (and minimum value, respectively) is chosen in the three shafts, the events generated are random.

The rotation speed of a shaft i calculated by the processing means is a pseudo-random value that varies between $v_{min\_i}$ and $v_{max\_i}$, calculated using the following expression:

$$\text{rotation speed of shaft i } v_i \text{ (Rpm)} = (v_{max\_i} - v_{min\_i}) * \text{rand}() + v_{min\_i}$$

wherein *rand()* is a function that generates a real pseudo-random value between 0.0 and 1.0.

The time value that must elapse to change the rotation speed of a shaft i, calculated by the processing means, is a pseudo-random value that varies between $t_{min\_i}$ and $t_{max\_i}$, calculated using the following expression:

$$\text{Time for speed-change in shaft i } t_i \text{ (s)} = (t_{max\_i} - t_{min\_i}) * \text{rand}() + t_{min\_i}$$

wherein *rand(s)* is the same previous function.

The pseudo-random system determined by these parameters makes it possible to assign any value to the foregoing parameters. Different applicability protocols will be defined in accordance with the application and circumstance of the sample.

In embodiments of the invention, the maximum rotation speed in shaft i $v_{max\_i}$ and the minimum rotation speed in shaft i $v_{min\_i}$ depend on the average speed calculated using the formula $g_{ef} = \left(\frac{3W^2 R}{g}\right) g$ described earlier. For each shaft, the average angular speed is related to the maximum and minimum speeds using the following equation:

$$W = \frac{V_{max\_i} + V_{\min\_i}}{2}$$

Preferably, the minimum speed value ($V_{min\_i}$) is considered as a percentage of the average angular speed value. This value $V_{min\_i}$ is provided to the system, for example, via a keyboard. This value indicates the minimum value that can be reached by the speed with respect to the average value. Knowing V (represented in the previous formula as W) and $V_{min\_i}$ makes it possible to know the value $V_{max\_i}$. With these values, the system calculates the pseudo-random values of the rotation speed (Rpm) of each shaft.

This makes it possible to choose random angular speed values close to an average angular speed value W for certain microgravity values, for a position with respect to the centre of the system.

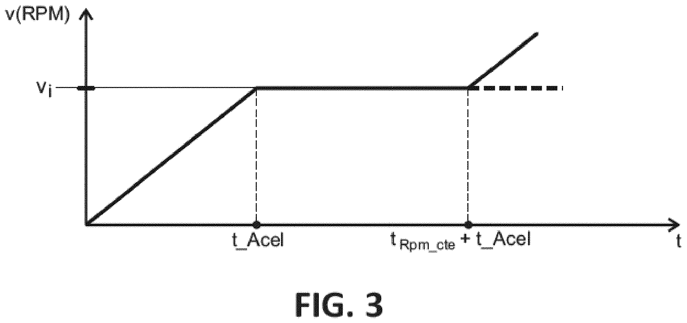

For each rotating shaft i there is also an additional parameter *t_Rpm_cte_i,* which represents the maximum time in seconds during which a shaft i rotates at the same speed $v_i$ (rpm). After an acceleration/deceleration phase or time, a shaft i reaches the calculated constant speed $v_i$ "rotation speed in shaft i (Rpm)". The time used in the acceleration or deceleration to reach that constant speed, in addition to the parameterised acceleration or deceleration value itself, depend on the variation with respect to the start speed, as shown by way of example in Figure 3. The first section of Figure 3 (ascending ramp) shows a time value used in the acceleration (t_Acel) of a rotating shaft. During this time t_Acel, the speed (RPM) of the shaft i in question goes from 0 to $v_i$. The greater the difference between the start speed (in $t_0$) and the destination speed $v_i$ (in t_Acel), the longer the time taken to reach the destination speed $v_i$. The second section of Figure 3 represents the maximum time during which the shaft i rotates at the same speed $v_i$ acquired in the previous stage. After this maximum time t_Rpm_cte, the shaft i can increase or decrease its rotation speed, but cannot keep it constant $v_i$ for a longer period of time. In turn, acceleration and deceleration parameters are configurable parameters which are used to adapt a speed to another, different speed (while speed is constant, the acceleration and deceleration parameters are not applied). In implementations of the invention, the acceleration and deceleration parameters may be predefined (set) for an operating cycle of the machine. In other implementations of the invention, the acceleration and deceleration parameter values may vary in a same operating cycle of the machine. In embodiments of the invention, if start and end speeds in a speed change are very similar in one shaft i, that length of time is limited to constant speed at a value lower than $t_{max\_i}$, forcing another speed change before the time determined by the t_Rpm_cte parameter. Thus, at each speed change (which occurs after the "time for speed change in shaft i $t_i$ (s)" elapses), calculated using the previous formula, or optionally beforehand if the start and end speeds in a speed change are very similar), a new rotation speed value and a new maximum time value that must elapse to cause another new speed change are generated. Note that the degree of similarity between start and end speeds depends on the application, such that for two different applications, same start and end speeds could be interpreted differently (in one case sufficiently similar to limit the duration of constant time at a value lower than t_Rpm_cte; and in another case sufficiently different to maintain the destination speed during a time equal to t_Rpm_cte).

The parameters of rotation speed of each shaft and speed-change time in each shaft give rise to the randomness (or pseudo-randomness), instability and unpredictability sought. Additionally, a third parameter may be used, which represents a change in direction in a shaft and which makes it possible to increase the degree of pseudo-randomness, instability and unpredictability sought.

Preferably, these indications of rotation speed, speed change, rotation speed change, etc., of each shaft are provided to the system 1 in a wired manner by the processor whereon the control software runs. That is, the servomotor and encoders are wired. Note that power must be supplied to the servomotors. Additionally, in order to control everything, a fieldbus is sent via the electrical collectors to control the whole system. This also makes it possible to place sensors in the centre of the machine, at various points occupied by the user (or by the sample, in general).

The change in direction in a shaft i is also random and independent from the change in direction in other shafts. When a direction change event occurs, a slow deceleration takes place up to zero speed, whereupon the direction of rotation of the shaft in question is reversed until the previous target speed is reached. Some parameters that make it possible to create a system of changes in rotation speed in each shaft i that contribute to create said feeling of instability, randomness and unpredictability for the entity (person, in the case of Figures 1A-1C) immersed in the system are described below. These parameters are maximum time for direction-change in shaft i ($t\_Dir\_max\_i$) and minimum time for direction-change in shaft i ($t\_Dir\_min\_i$). With these, the time value ($t\_Dir\_i$) after which a change in the direction of rotation of a rotating shaft i occurs is calculated by the processing means. It is a random value that varies between $t\_Dir\_min\_i$ and $t\_Dir\_max\_i,$ calculated using the following expression:

$$t\_Dir\_i = (t\_Dir\_max\_i - t\_Dir\_min\_i)* \text{rand()} + t\_Dir\_min\_i$$

wherein *rand()* is the same previous function.

Every $t\_Dir\_i$ seconds, a change in the direction of rotation of the shaft i is forced. Additionally, the change in direction gives rise to a new calculation of rotation speed in shaft i $v_i$ (Rpm) actuated by one or more motors and of time for speed-change (s). Note that each shaft i is independent from the other shafts with respect to this and the other parameters. Thus, a chaotic system is achieved due to the continuous change of the parameters. In embodiments of the invention, the value of one or more parameters of those defined may coincide in one or more rotating shafts.

All these calculations and variables give rise to a system of changes which are continuous, chaotic, unstable and unpredictable by the entity immersed in the system. Each shaft i (in Figures 1A-1C, shafts 10a, 11a, 12a) has different speeds, different directions and different moments for changing and reversing them. In accordance with the application, one or other maximum rotation speed values of the motor or motors of the shaft i, minimum rotation speed values of the motor or motors of the shaft i, maximum time for changing rotation speed in the motor or motors of a shaft i, minimum time for changing rotation speed in the motor or motors of the shaft i, etc., will be chosen. For example, in an application intended for subjecting a microorganism to microgravity, these values will be different than those of an application intended for subjecting persons to microgravity. Even in the case of persons, these values may vary depending on whether it is, for example, a therapeutic treatment or a recreational activity. This prevents the living organisms housed in the housing means (for example, seat 60) of the mechatronic system from becoming stabilised and losing the effect of microgravity.

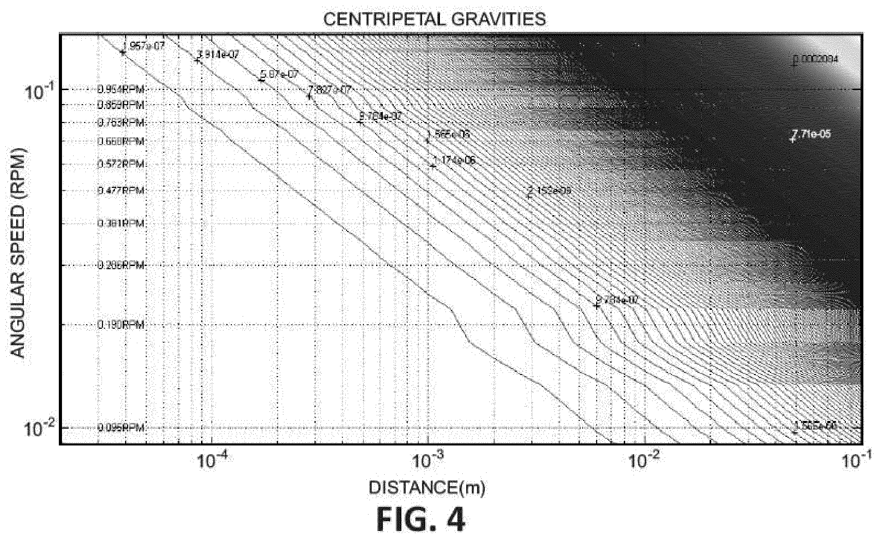

Figure 4 shows a graph representing the levels of microgravity experimentally obtained with a mechatronic system such as that shown schematically in Figures 1A-1C. Specifically, the mechatronic system through which the microgravity values represented in Figure 4 have been obtained is a mechatronic system with three bodies or rotating frames, wherein the means for housing the sample is not a seat, but rather a receptacle for holding or inserting a sample. The manufactured mechatronic system has been dimensioned as follows: each rotating frame or arch is rectangular. Gear motors formed by a sensor, a motor and two-speed reducers have been used for the three shafts. The sensor is a HEDS 5540 Series, Model 110513 3 channel-type Encoder with 500 pulses per revolution and two 5 V supply pins and with a maximum operating frequency of 100 kHz. The motor is an A-max 32 DC motor model 353222 with a Nominal Power of 15W and a Nominal speed of 2850 rpm, delivering a Nominal Torque of 36.3 mN.m. The DC motor has a maximum output voltage of 12 Volts and with a current of 56.6 mA without load and with a structure at 100 mA, supporting a maximum current of 1.3 A. The first speed reducer is a GP-42 Series, Model 260554 linear reducer, Type: Planetary Gear, Reduction 236:1, Max. Torque: 15 N.m for continuous movements and 22.5 N.m for intermittent movements, such as changes in rotation direction, stops or start according to the data sheet. The second reducer, with a speed of 10:1, is a 90° reducer, AER050010 Model. The nominal speed or working speed with load is 2850 RPM (nominal motor speed). Output speed is 2850 / 2360 = 1.2 RPM. The graph of Figure 4 was generated in an experiment in which no load is lifted, due to which nominal speed was varied from zero to 6700 RPM, which is the speed limit for that motor. Therefore, the maximum speed of the machine used and from which the values represented in Figure 4 were obtained is 6700 / 2360 = 2.8 RPM.

Figure 4 shows levels of microgravity in accordance with the distance from the central point of the machine or apparatus, said distance being represented on the horizontal axis at logarithmic scale, and angular speed, represented on the vertical axis in RPM, taken experimentally with the machine described in the preceding paragraph. Sensors (IMU) that report angular values at different points of the machine were used. The angular speed resulting from the complete system is represented on the vertical axis. The graph represents different effective gravity values obtained at a certain distance from the centre of the mechatronic system (x-axis) in accordance with the angular speed of the system. As can be observed on the graph, at distances of 10 cm from the central point of the machine, levels of microgravity of around $G/10^5$ are achieved.

Various experiments have been carried out with the previously described and parameterised mechatronic system. In one of them, the gene expression of fruit fly pupae subjected to microgravity for four days using the described machine was analysed. These experiments were carried out at 24° $\pm$ 0.5°C, without cold pre-treatment. Comparing the evolution over the four days, it was observed that some genes were expressed and some were inhibited over this time period dynamically, which proves that the microgravity activates the gene expression without the organism becoming accustomed to the microgravity. That is, the changes observed over the four days prove that the organism does not become accustomed to the microgravity. The results of comparing these experiments with those carried out at the International Space Station (ISS) (see the section corresponding to the Background of the Invention) have shown that there are at least 29 common genes which responded to the microgravity, inter alia: CG13231, CG13551, CG13877, CG17404, CG1648, CG3397, CG3597, CG6600, CG10219, CG12139, CG12290, CG12876, CG3508, CG4439, CG32436, CG7220, CG30035, CG7860, CG7878, CG10083, CG10158, CG1516, CG7611, CG8863, CG17746, CG33070, CG5445, CG9636, CG16708. The first nine ones show an expression of messenger RNA and the others show an inhibition of the messenger RNA under microgravity conditions.

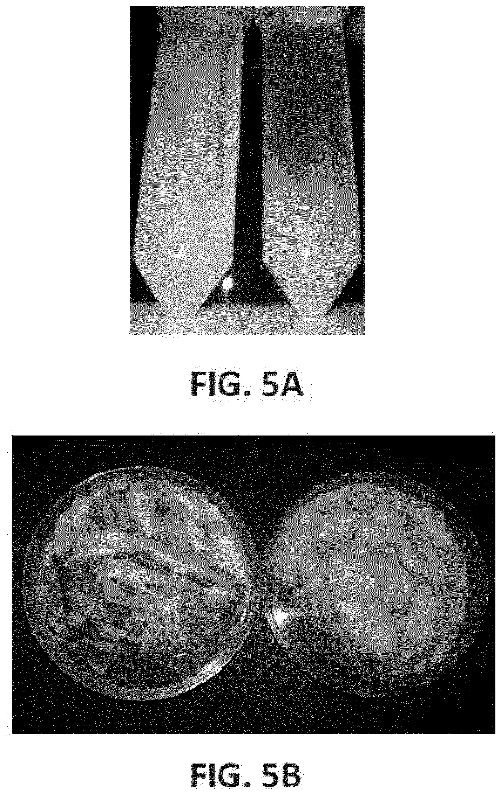

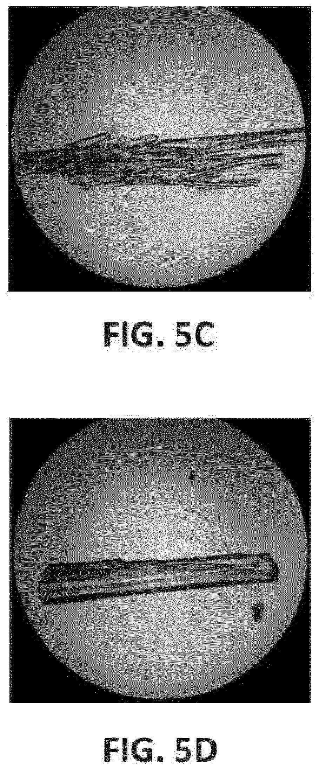

Experiments have been carried out on inert beings using the same mechatronic system. For example, a salt crystallisation (Potassium nitrate) experiment was carried out under microgravity. In this experiment, potassium nitrate was dissolved in 120 ml of distilled water at a temperature of approximately 90°C, obtaining a 50% saline solution (p/v). As of this solution, two aliquots of the solution were taken in two 50 ml Falcon centrifuge tubes (control: G; experimental: M), filling them completely. Tube G was maintained under normal gravity conditions, while tube M was placed in the central platform of the previously described and parameterised mechatronic system with three rotation shafts. The experiment had duration of 150 minutes, at a temperature of approximately 18°C. At the end of the experiment, the crystals obtained in both experiments were filtered and dried (Figures 5A and 5B) in order to observe them under a microscope (magnification: 40X) (Figures 5C and 4D). Figure 5A shows the crystals obtained upon completing the experiments (tubes G and M). Figure 5B shows the dry crystals obtained in tubes G and M. Figure 5C shows the crystals formed under simulated microgravity conditions (tube M). Figure 5D shows the crystals formed under normal gravity conditions (tube G).

A mechatronic system such as that shown schematically in Figures 1A-1C was also manufactured, designed to subject human beings to controlled microgravity, which was designed to function properly with loads greater than 50 kg, such as greater than 75 kg, of up to 150 kg on the seat 60. Prior to manufacturing, it was simulated with a weight of 250 kg and the volume of a person 1.80 m tall and weighing 70 kg. All the structure, motors and other elements were adequately dimensioned to generate constant microgravity. In a specific implementation, the machine 1 was designed, in which three rotating frames and corresponding rotating shafts were disposed on an iron structure, with servomotors of 3670, with a nominal torque of 12 N.m and nominal speed of 3000 rpm each. Planetary gears with a 50:1 gear reduction with a nominal output torque of 650 N.m at a speed of 3000 rpm each, due to which the theoretical speed of each motor may vary from 0 to 60 rpm (maximum one turn per second).

The randomness of the system can be experimentally verified by calculating the movement period or oscillation period of a sample. To this end, the angular speed of the sample subjected to microgravity can be measured at different points of the same (which vary with respect to the central point of the machine) using an encoder disposed in the sample, and moving the encoder to different points of the sample, in order to observe the variation in the angular speed of the sample upon being subjected to the system. The movement period or oscillation period T is calculated as follows: $T = 2(PI)(N)/W$, where N is the degrees of freedom and W is the experimental angular speed obtained by the Encoder.

As observed throughout this disclosure, the mechatronic system implemented as a three-dimensional clinostat makes it possible to simulate a simulated microgravity environment on the ground and provides a level of microgravity, combined with a generation of instability, which does not allow living organisms to be studied to adapt to the simulated microgravity. Additionally, the means intended for housing the sample support a load of around 150 kg. The applications of the present invention include research of materials subjected to microgravity and changes in the molecular structure of the living organisms, inter alia. The system of the invention has been tested experimentally, both on living and inert organisms.

According to the need (type of application for which the apparatus 1 is being used) and capacity of the sample (in the case of Figures 1A-1C, person) subjected to the forces and movements of the apparatus 1, control logics for limiting the aforementioned rotations at a certain previously indicated number N of degrees of freedom and N rotating shafts can be executed. For example, using control logics it can be imposed, in the machine of Figure 1, that N=2, i.e. that the machine will operate with two rotating shafts and therefore 2 degrees of freedom. In other words, it can be imposed that the motor or motors that actuate one of the shafts will be shut down, preventing the movement of the respective rotating body on said shaft. Note that with N>2 (i.e. at least three rotating shafts) a sufficient level of instability for a living being is achieved. While microgravity can be achieved using a single rotating shaft, or two rotating shafts, the organism introduced in the interior thereof and subjected to microgravity would become stabilised very quickly. That is, it was observed that the greater N, the greater the randomness of the system. In other words, the number N of rotating shafts influences the resulting randomness.

As evidenced in the present text, the present disclosure provides two differential factors with respect to conventional clinostats: a) more effective instability that makes it possible to extend the duration of the experiments, since it does not allow the sample, in the case of being a living organism, to adapt to the simulated microgravity environment; and b) the possibility of introducing high loads, such as greater than 50 kg, or greater than 75 kg, of up to 150 kg, without affecting the effect of the simulated microgravity.

In this text, the term "comprises" and its derivations (such as "comprising", etc.) should not be understood in an excluding sense, i.e. these terms should not be interpreted as excluding the possibility that what is described and defined can include elements, additional steps, etc.

In the context of the present invention, the term "approximately" and terms of its family (such as "approximate", etc.) should be interpreted as indicating values very close to those accompanying said term. That is, a deviation within reasonable limits with respect to an exact value should be accepted, because a person skilled in the art would understand that such deviation from the indicated value may be inevitable due to measurement inaccuracies, etc. The same applies to the terms "some", "around" and "substantially".

The invention is obviously not limited to the specific embodiment(s) described, but rather encompasses any variation that can be considered by any person skilled in the art (for example, in relation to the choice of materials, dimensions, components, configuration, etc.), within the general scope of the invention as defined in the claims.

## Claims

1. An apparatus (1) for generating microgravity, comprising:

    a first rotating body (12) configured to rotate around a first shaft (12a) through the actuation of first actuation means (24),
    a means (60) for housing a sample, wherein the means (60) is circumscribed in the first rotating body (12) and connected to the first rotating body (12),
    a second rotating body (11) configured to rotate around a second shaft (11a) through the actuation of second actuation means (23), wherein the first rotating body (12) is disposed in the interior of a volume delimited by the second rotating body (11) when it rotates around said second shaft (11a) and connected to the second rotating body (11),
    wherein the apparatus further comprises:

    a third rotating body (10) configured to rotate around a third shaft (10a) through the actuation of third actuation means (21, 22), wherein the rotating body (11) is disposed in the interior of a volume delimited by the third rotating body (10) when it rotates around the third shaft (10a) and connected to the third rotating body (10),
    wherein said first (24), second (23) and third (21, 22) actuation means are independent from each other, the rotation of each shaft (12a, 11a, 10a) being independent from the rotation of the other shafts,
    wherein the rotation of said rotating bodies (10, 11, 12) generates a level of simulated microgravity in said means (60) for housing a sample,
    processing means configured to control the rotation of each of said shafts (12a, 11a, 10a) through the application, in each of said shafts (12a, 11a, 10a), of a pseudo-random value of rotation speed that varies between a minimum value $v_{min\_i}$ and a maximum value $v_{max\_i}$ previously established for each shaft i, during a pseudo-random time that varies between a minimum value $t_{min\_i}$ and a maximum value $t_{max\_i}$ previously established for each shaft i, achieving an instability effect to prevent the sample housed in said means (60) from adapting to the simulated microgravity generated by the apparatus (1).

2. The apparatus of claim 1, wherein in each shaft, said minimum value $v_{min\_i}$ is a percentage of an average angular speed in said shaft, wherein said average angular speed is obtained from a desired level of microgravity and a distance from the centre of said means (60) at which said desired level of microgravity must be achieved.

3. The apparatus of any of the preceding claims, wherein said means (60) for housing a sample is a seat for a person to sit down in the centre of the apparatus (1).

4. The apparatus of any of the preceding claims, wherein said processing means is configured to limit the inclination of each of the shafts (12a, 11a, 10a) with respect to the vertical, at a predetermined maximum value of degrees of inclination.

5. The apparatus of any of the preceding claims, wherein said pseudo-random value of rotation speed of each of said shafts (12a, 11a, 10a) is calculated as follows, for each shaft i:

$$\text{rotation speed in shaft i } v_i \text{ (Rpm)} = (v_{max\_i} - v_{min\_i}) * \text{rand()} + v_{min\_i}$$

wherein *rand()* is a function that generates a real pseudo-random value between 0.0 and 1.0, $v_{max\_i}$ is the maximum rotation speed of the shaft i and $v_{min\_i}$ is the minimum rotation speed of the shaft i; and said pseudo-random time value during which each shaft i rotates at the calculated rotation speed, is calculated as follows:

$$\text{time for speed-change in shaft i } t_i \text{ (s)} = (t_{max\_i} - t_{min\_i}) * \text{rand()} + t_{min\_i}$$

wherein *rand()* is the same previous function, $t_{max\_i}$ is the maximum time for a rotation speed-change in shaft i and $t_{min\_i}$ is the minimum time rotation speed-change time.

6.  The apparatus of any of the preceding claims, wherein said processing means is configured to control the direction of rotation of each of said shafts (12a, 11a, 10a) through the application of a change in direction in each shaft i whenever a time whose value is a pseudo-random value varying between a minimum value *t_Dir_min_i* and a maximum value *t_Dir_max_i* previously established for said shaft i, elapses.

7.  The apparatus of claim 6, wherein said pseudo-random time value for applying a change in direction in each of said shafts (12a, 11a, 10a) is calculated as follows, for each shaft i:

$$t\_Dir\_i = (t\_Dir\_max\_t - t\_Dir\_min\_i) * \text{rand()} + t\_Dir\_min\_i$$

wherein *rand()* is a function that generates a real random or pseudo-random value between 0.0 and 1.0, *t_Dir_max_i* is the maximum time for direction-change in shaft i and *t_Dir_min_i* is the minimum time for direction-change in shaft i.

8.  The apparatus of any of the preceding claims, wherein said processing means is configured to impose a maximum time value for which a shaft i rotates at a same speed.

9.  The apparatus of any of the preceding claims, which comprises a control panel configured to control at least one of the following parameters: speed of each of the rotating shafts $v_i$ (12a, 11a, 10a), direction of movement of each rotating shaft (12a, 11a, 10a) and maximum time value during which a shaft i rotates at the same speed $t_i$.

10. A method for generating simulated microgravity by means of an apparatus (1) comprising a first rotating body (12) configured to rotate around a first shaft (12a), through the actuation of first actuation means (24); a means (60) for housing a sample, wherein the means (60) is circumscribed in the first rotating body (12) and connected to the first rotating body (12); a second rotating body (11) configured to rotate around a second shaft (11a) through the actuation of second actuation means (23), wherein the first rotating body (12) is disposed in the interior of a volume delimited by the second rotating body (11) when it rotates around said second shaft (11a) and connected to the second rotating body (11); and a third rotating body (10) configured to rotate around a third shaft (10a) through the actuation of third actuation means (21, 22), wherein the second rotating body (11) is disposed in the interior of a volume delimited by the third rotating body (10) when it rotates around the third shaft (10a) and connected to the third rotating body (10), wherein said first (24), second (23) and third (21, 22) actuation means are independent from each other, the method comprising:

    rotating said first, second and third rotating bodies (12, 11, 10) around said shafts (12a, 11a, 10a) through the independent actuation of said first (24), second (23) and third (21, 22) actuation means,
    controlling the rotation of each of the shafts (12a, 11a, 10a) through the application, in each of said shafts (12a, 11a, 10a), of a pseudo-random value of rotation speed $v_i$ that varies between a minimum value $v_{min\_i}$ and a maximum value $v_{max\_i}$ previously established for each shaft i, during a pseudo-random time value $t_i$, that varies between a minimum value $t_{min\_i}$ and a maximum value $t_{max\_i}$ previously established for each shaft i.

11. The method of claim 10, wherein the minimum rotation speed value $v_{min\_i}$ for each shaft is obtained as follows:

    calculating an angular speed at which said shaft must rotate to achieve a certain level of microgravity at a certain distance from the centre of said means (60),
    calculating a percentage of said angular speed, wherein said percentage is the minimum value $v_{min\_i}$.

12. The method of any of claims 10 or 11, wherein said pseudo-random value of rotation speed of each of said shafts (12a, 11a, 10a) is calculated as follows, for each shaft i:

$$\text{rotation speed in shaft i vi (Rpm)} = (v_{max\_i} - v_{min\_i})*\text{rand}() + v_{min\_i}$$

wherein *rand()* is a function that generates a real pseudo-random time value between 0.0 and 1.0, $v_{max\_i}$ is the maximum rotation speed in shaft i and $v_{min\_i}$ is the minimum rotation speed in shaft i; and
said pseudo-random value of time during which each shaft i rotates at the calculated rotation speed is calculated as follows:

$$\text{time for speed-change in shaft i } t_i \text{ (s)} = (t_{max\_i} - t_{min\_i})*\text{rand}() + t_{min\_i}$$

wherein rand () is the same previous function, $t_{max\_i}$ is the maximum time for speed-change maintaining the direction of rotation of the shaft i and $t_{min\_i}$ is the minimum time for speed-change maintaining the direction of rotation of the shaft i.

13. The method of any of claims 10 to 12, further comprising controlling the direction of rotation of each of said shafts (12a, 11a, 10a) through the application of a change in direction in each shaft i whenever a time whose value is a pseudo-random value varying between a minimum value *t_Dir min_i* and a maximum value *t_Dir max_i* previously established for each shaft i, elapses.

14. The method of claim 13, wherein said pseudo-random time value for applying a change in direction in each of said shafts (12a, 11a, 10a) is calculated as follows, for each shaft i:

$$t\_Dir\_i = (t\_Dir\_max\_i - t\_Dir\_min\_i)* \text{rand}() + t\_Dir\text{-}min\text{-}i$$

wherein rand() is a function that generates a real random or pseudo-random value between 0.0 and 1.0, *t_Dir_max_i* is the maximum time for a direction-change in shaft i and *t_Dir_min_i* is the minimum tine for a direction-change in shaft i,
wherein said change in direction gives rise to a new calculation of rotation speed in shaft i and a new calculation of speed-change time.

**Patentansprüche**

1. Vorrichtung (1) zur Erzeugung von Mikrogravitation, mit:

einem ersten Drehkörper (12), der so konfiguriert ist, dass er sich um eine erste Welle (12a) durch die Betätigung eines ersten Betätigungsmittels (24) dreht,
einem Mittel (60) zur Aufnahme einer Probe, wobei das Mittel (60) in dem ersten Drehkörper (12) eingegrenzt und mit dem ersten Drehkörper (12) verbunden ist,
einem zweiten Drehkörper (11), der so konfiguriert ist, dass er sich durch die Betätigung eines zweiten Betätigungsmittels (23) um eine zweite Welle (11a) dreht, wobei der erste Drehkörper (12) im Inneren eines Volumens angeordnet ist, das durch den zweiten Drehkörper (11) begrenzt wird, wenn er sich um die zweite Welle (11a) dreht und mit dem zweiten Drehkörper (11) verbunden ist,
wobei die Vorrichtung ferner umfasst:

einen dritten Drehkörper (10), der so konfiguriert ist, dass er sich durch die Betätigung eines dritten Betätigungsmittels (21, 22) um eine dritte Welle (10a) dreht, wobei der Drehkörper (11) im Inneren eines Volumens angeordnet ist, das durch den dritten Drehkörper (10) begrenzt ist, wenn er sich um die dritte Welle (10a) dreht, und mit dem dritten Drehkörper (10) verbunden ist,
**dadurch gekennzeichnet, dass** die ersten (24), zweiten (23) und dritten (21, 22) Betätigungsmittel unabhängig voneinander sind, wobei die Drehung jeder Welle (12a, 11a, 10a) unabhängig von der Drehung der anderen Wellen ist,
wobei die Drehung der Drehkörper (10, 11, 12) ein Level simulierter Mikrogravitation in dem Mittel (60) zur Aufnahme einer Probe erzeugt,

Verarbeitungsmittel, die so konfiguriert sind, dass sie die Drehung jeder der Wellen (12a, 11a, 10a) steuern, indem sie in jeder der Wellen (12a, 11a, 10a) einen pseudozufälligen Wert der Drehzahl anwenden, der zwischen einem Minimalwert $v_{min\_i}$ und einem Maximalwert $v_{max\_i}$ variiert, der zuvor für jede Welle i festgelegt wurde, während einer Pseudozufallszeit, die zwischen einem Minimalwert $t_{min\_i}$ und einem Maximalwert $t_{max\_i}$, der zuvor für jede Welle i festgelegt wurde, variiert, wodurch ein Instabilitätseffekt erzielt wird, um zu verhindern, dass sich die in dem Mittel (60) untergebrachte Probe an die von der Vorrichtung (1) erzeugte simulierte Mikrogravitation anpasst.

2. Vorrichtung nach Anspruch 1, wobei in jeder Welle der Mindestwert $v_{min\_i}$ ein Prozentsatz einer durchschnittlichen Winkelgeschwindigkeit in der Welle ist, wobei die durchschnittliche Winkelgeschwindigkeit aus einem gewünschten Level der Mikrogravitation und einem Abstand vom Zentrum des Mittels (60), bei dem das gewünschte Level der Mikrogravitation erreicht werden muss, erhalten wird.

3. Vorrichtung nach einem der vorhergehenden Ansprüche, wobei die Einrichtung (60) zur Aufnahme einer Probe ein Sitz ist, auf den sich eine Person im Zentrum der Vorrichtung (1) setzen kann.

4. Vorrichtung nach einem der vorhergehenden Ansprüche, wobei das Verarbeitungsmittel so konfiguriert ist, dass es die Neigung jeder der Wellen (12a, 11a, 10a) in Bezug auf die Vertikale auf einen vorbestimmten Maximalwert von Neigungsgraden begrenzt.

5. Vorrichtung nach einem der vorhergehenden Ansprüche, wobei der Pseudozufallswert der Drehzahl jeder der Wellen (12a, 11a, 10a) für jede Welle i wie folgt berechnet wird:

$$\text{Drehzahl in Welle i } v_i \text{ (Rpm)} = (v_{max\_i} - v_{min\_i})*\text{rand()} + v_{min\_i}$$

wobei rand() eine Funktion ist, die einen realen Pseudo-Zufallswert zwischen 0,0 und 1,0 erzeugt, $v_{max\_i}$ die maximale Drehzahl der Welle i ist und $v_{min\_i}$ die minimale Drehzahl der Welle i ist; und
der Pseudozufallszeitwert, während dessen sich jede Welle i mit der berechneten Drehzahl dreht, wie folgt berechnet wird:

$$\text{Zeit für die Drehzahländerung der Welle i } t_i \text{ (s)} = (t_{max\_i} - t_{min\_i})*\text{rand()} + t_{min\_i}$$

wobei rand() die gleiche Funktion wie oben ist, $t_{max\_i}$ die maximale Zeit für eine Drehzahländerung der Welle i ist und $t_{min\_i}$ die minimale Zeit Drehzahländerungszeit ist.

6. Vorrichtung nach einem der vorhergehenden Ansprüche, wobei das Verarbeitungsmittel so konfiguriert ist, dass es die Drehrichtung jeder der Wellen (12a, 11a, 10a) durch die Anwendung einer Richtungsänderung in jeder Welle i steuert, wann immer eine Zeit abläuft, deren Wert ein Pseudozufallswert ist, der zwischen einem Minimalwert t_Dir_min_i und einem Maximalwert t_Dir_max_i, der zuvor für die Welle i festgelegt wurde, variiert.

7. Vorrichtung nach Anspruch 6, bei der der Pseudozufallszeitwert für die Anwendung einer Richtungsänderung in jeder der Wellen (12a, 11a, 10a) für jede Welle i wie folgt berechnet wird:

$$t\_Dir\_i = (t\_Dir\_max\_t - t\_Dir\_min\_i)* \text{ rand()} + t\_Dir\_min\_i$$

wobei rand() eine Funktion ist, die einen realen Zufalls- oder Pseudozufallswert zwischen 0,0 und 1,0 erzeugt, t_Dir_max_i die maximale Zeit für die Richtungsänderung in Welle I ist, und t_Dir_min_i die minimale Zeit für die Richtungsänderung in Welle i ist.

8. Vorrichtung nach einem der vorhergehenden Ansprüche, wobei das Verarbeitungsmittel zur Festlegung eines maximalen Zeitwertes konfiguriert ist, für den sich eine Welle i mit derselben Geschwindigkeit dreht.

9. Vorrichtung nach einem der vorhergehenden Ansprüche, die ein Bedienfeld umfasst, das so konfiguriert ist, dass es mindestens einen der folgenden Parameter steuert: Geschwindigkeit jeder der rotierenden Wellen $v_i$ (12a, 11a, 10a), Bewegungsrichtung jeder rotierenden Welle (12a, 11a, 10a) und maximaler Zeitwert, während dessen sich eine Welle i mit der gleichen Geschwindigkeit $t_i$ dreht.

10. Verfahren zum Erzeugen simulierter Mikrogravitation mittels einer Vorrichtung (1), mit einem ersten Drehkörper (12), der zum Drehen um eine erste Welle (12a) durch die Betätigung eines ersten Betätigungsmittels (24) konfiguriert ist, einem Mittel (60) zum Aufnehmen einer Probe, wobei das Mittel (60) in dem ersten Drehkörper (12) eingegrenzt und mit dem ersten Drehkörper (12) verbunden ist; einem zweiten Drehkörper (11), der zum Drehen um eine zweite Welle (11a) durch die Betätigung eines zweiten Betätigungsmittels (23) konfiguriert ist, wobei der erste Drehkörper (12) im Inneren eines Volumens angeordnet ist, das durch den zweiten Drehkörper (11) begrenzt ist, wenn dieser sich um die zweite Welle (11a) dreht, und mit dem zweiten Drehkörper (11) verbunden ist; und einem dritten Drehkörper (10), der zum Drehen um eine dritte Welle (10a) durch die Betätigung eines dritten Betätigungsmittels (21, 22) konfiguriert ist, wobei der zweite Drehkörper (11) im Inneren eines durch den dritten Drehkörper (10) begrenzten Volumens angeordnet ist, wenn dieser sich um die dritte Welle (10a) dreht, und mit dem dritten Drehkörper (10) verbunden ist, wobei das erste (24), das zweite (23) und das dritte (21, 22) Betätigungsmittel unabhängig voneinander sind,

das Verfahren umfassend:

Drehen des ersten, zweiten und dritten Drehkörpers (12, 11, 10) um die Wellen (12a, 11a, 10a) durch die unabhängige Betätigung des ersten (24), zweiten (23) und dritten (21, 22) Betätigungsmittels,
Steuern der Drehung jeder der Wellen (12a, 11a, 10a) durch Anwendung eines Pseudozufallswertes der Drehgeschwindigkeit $v_i$, der zwischen einem Minimalwert $v_{min\_i}$ und einem Maximalwert $v_{max\_i}$ variiert, die zuvor für jede Welle i festgelegt wurden, während eines Pseudozufallszeitwertes $t_i$, der zwischen einem Minimalwert $t_{min\_i}$ und einem Maximalwert $t_{max\_i}$ variiert, die zuvor für jede Welle i festgelegt wurden, in jeder der Wellen (12a, 11a, 10a).

11. Verfahren nach Anspruch 10, wobei der minimale Drehzahlwert $v_{min\_i}$ für jede Welle wie folgt erhalten wird:

Berechnen einer Winkelgeschwindigkeit, mit der sich die Welle drehen muss, um ein bestimmtes Level an Mikrogravitation in einem bestimmten Abstand vom Zentrum des Mittels (60) zu erreichen,
Berechnen eines Prozentsatzes dieser Winkelgeschwindigkeit, wobei dieser Prozentsatz der Mindestwert $v_{min\_i}$ ist.

12. Verfahren nach einem der Ansprüche 10 oder 11, wobei der Pseudo-Zufallswert der Drehzahl jeder der Wellen (12a, 11a, 10a) für jede Welle i wie folgt berechnet wird:

$$\text{Drehzahl in Welle i vi (Rpm)} = (v_{max\_i} - v_{min\_i})*\text{rand}() + v_{min\_i}$$

wobei rand() eine Funktion ist, die einen realen Pseudozufallszeitwert zwischen 0,0 und 1,0 erzeugt, $v_{max\_i}$ die maximale Drehzahl in Welle i ist und $v_{min\_i}$ die minimale Drehzahl in Welle i ist; und
der Pseudozufallswert der Zeit, während der jede Welle i mit der berechneten Drehzahl rotiert, wie folgt berechnet wird:

$$\text{Zeit für Drehzahländerung in Welle i } t_i \text{ (s)} = (t_{max\_i} - t_{min\_i})*\text{rand}() + t_{min\_i}$$

wobei rand () dieselbe vorhergehende Funktion ist, $t_{max\_i}$ die maximale Zeit für die Drehzahländerung unter Beibehaltung der Drehrichtung der Welle i ist und $t_{min\_i}$ die minimale Zeit für die Drehzahländerung unter Beibehaltung der Drehrichtung der Welle i ist.

13. Verfahren nach einem der Ansprüche 10 bis 12, ferner mit dem Steuern der Drehrichtung jeder der Wellen (12a, 11a, 10a) durch Anwenden einer Richtungsänderung in jeder Welle i, wenn eine Zeit abläuft, deren Wert ein Pseudozufallswert ist, der zwischen einem Minimalwert t_Dir min_i und einem Maximalwert t_Dir max_i variiert, der zuvor für jede Welle i festgelegt wurde.

14. Verfahren nach Anspruch 13, wobei der Pseudozufallszeitwert für die Anwendung einer Richtungsänderung in jeder der Wellen (12a, 11a, 10a) für jede Welle i wie folgt berechnet wird:

$$t\_Dir\_i = (t\_Dir\_max\_i - t\_Dir\_min\_i)* \text{rand()} + t\_Dir\text{-}min\text{-}i$$

wobei rand() eine Funktion ist, die einen realen Zufalls- oder Pseudozufallswert zwischen 0,0 und 1,0 erzeugt, t_Dir_max_i die maximale Zeit für eine Richtungsänderung in Welle i ist und t_Dir_min_i die minimale Zeit für eine Richtungsänderung in Welle i ist,
wobei die Richtungsänderung eine Neuberechnung der Drehzahl in der Welle i und eine Neuberechnung der Drehzahländerungszeit zur Folge hat.

**Revendications**

1. Appareil (1) pour la génération de microgravité, comprenant :

   un premier corps rotatif (12) configuré pour tourner autour d'un premier arbre (12a) par l'actionnement d'un premier moyen d'actionnement (24),
   un moyen (60) pour loger un échantillon, le moyen (60) étant circonscrit dans le premier corps rotatif (12) et étant relié au premier corps rotatif (12),
   un deuxième corps rotatif (11) configuré pour tourner autour d'un deuxième arbre (11a) par l'actionnement d'un deuxième moyen d'actionnement (23), le premier corps rotatif (12) étant disposé à l'intérieur d'un volume délimité par le deuxième corps rotatif (11) lorsqu'il tourne autour dudit deuxième arbre (11a), et étant relié au deuxième corps rotatif (11),

   l'appareil comprenant en outre :

   un troisième corps rotatif (10) configuré pour tourner autour d'un troisième arbre (10a) par l'actionnement d'un troisième moyen d'actionnement (21, 22), le corps rotatif (11) étant disposé à l'intérieur d'un volume délimité par le troisième corps rotatif (10) lorsqu'il tourne autour du troisième arbre (10a), et étant relié au troisième corps rotatif (10),
   où lesdits premier (24), deuxième (23) et troisième (21, 22) moyens d'actionnement sont indépendants les uns des autres, la rotation de chaque arbre (12a, 11 a, 10a) étant indépendante de la rotation des autres arbres,
   où la rotation desdits corps rotatifs (10, 11, 12) génère un niveau de microgravité simulée dans ledit moyen (60) pour logement un échantillon,
   un moyen de traitement configuré pour contrôler la rotation de chacun desdits arbres (12a, 11a, 10a) par l'application, dans chacun desdits arbres (12a, 11a, 10a), d'une valeur pseudo-aléatoire de vitesse de rotation qui varie entre une valeur minimale $v_{min\_i}$ et une valeur maximale $v_{max\_i}$ préalablement établies pour chaque arbre i, pendant un temps pseudo-aléatoire qui varie entre une valeur minimale $t_{min\_i}$ et d'une valeur maximale $t_{max\_i}$ préalablement établies pour chaque arbre i, réalisant un effet d'instabilité pour empêcher l'échantillon logé dans ledit moyen (60) de s'adapter à la microgravité simulée générée par l'appareil (1).

2. Appareil selon la revendication 1, dans lequel, dans chaque arbre, ladite valeur minimale $v_{min\_i}$ est un pourcentage d'une vitesse angulaire moyenne dans ledit arbre, ladite vitesse angulaire moyenne étant obtenue à partir d'un niveau de microgravité souhaité et d'une distance par rapport au centre dudit moyen (60) à laquelle ledit niveau de microgravité souhaité doit être atteint.

3. Appareil selon l'une quelconque des revendications précédentes, dans lequel ledit moyen (60) pour loger un échantillon est un siège permettant à une personne de s'asseoir au centre de l'appareil (1).

4. Appareil selon l'une quelconque des revendications précédentes, dans lequel ledit moyen de traitement est configuré pour limiter l'inclinaison de chacun des arbres (12a, 11a, 10a) par rapport à la verticale, à une valeur de degrés d'inclinaison maximale prédéterminée.

5. Appareil selon l'une quelconque des revendications précédentes, dans lequel ladite valeur pseudo-aléatoire de vitesse de rotation de chacun desdits arbres (12a, 11a, 10a) est calculée comme suit pour chaque arbre i :

$$\text{vitesse de rotation dans l'arbre i } v_i \text{ (tr/min)} = (v_{max\_i} - v_{min\_i})*\text{rand()} + v_{min\_i}$$

où *rand()* est une fonction qui génère une valeur pseudo-aléatoire réelle comprise entre 0,0 et 1,0, $v_{max\_i}$ est la vitesse de rotation maximale de l'arbre i et $v_{min\_i}$ est la vitesse de rotation minimale de l'arbre i ; et ladite valeur de temps pseudo-aléatoire pendant lequel chaque arbre i tourne à la vitesse de rotation calculée est calculée comme suit :

$$\text{temps pour un changement de vitesse de l'arbre i } t_i \text{ (s)} = (t_{max\_i} - t_{min\_i}) * rand() + t_{min\_i}$$

où *rand()* est la même fonction précédente, $t_{max\_i}$ est le temps maximal pour un changement de vitesse de rotation de l'arbre i et $t_{min\_i}$ est le temps minimal pour un changement de vitesse de rotation.

6.  Appareil selon l'une quelconque des revendications précédentes, dans lequel ledit moyen de traitement est configuré pour contrôler le sens de rotation de chacun desdits arbres (12a, 11a, 10a) par l'application d'un changement de direction dans chaque arbre i chaque fois que s'écoule un temps dont la valeur est une valeur pseudo-aléatoire variant entre une valeur minimale *t_Dir_min_i* et une valeur maximale *t_Dir_max_i* préalablement établies pour ledit arbre i.

7.  Appareil selon la revendication 6, dans lequel ladite valeur de temps pseudo-aléatoire pour appliquer un changement de direction dans chacun desdits arbres (12a, 11a, 10a) est calculée comme suit pour chaque arbre i :

$$t\_Dir\_i = (t\_Dir\_max\_t - t\_Dir\_min\_i)* \ rand() + t\_Dir\_min\_i$$

où rand() est une fonction qui génère une valeur aléatoire ou pseudo-aléatoire réelle comprise entre 0,0 et 1,0, *t_Dir_max_i* est le temps maximal pour un changement de direction dans l'arbre i et *t_Dir_min_i* est le temps minimal pour un changement de direction dans l'arbre i.

8.  Appareil selon l'une quelconque des revendications précédentes, dans lequel ledit moyen de traitement est configuré pour imposer une valeur de temps maximale pendant laquelle un arbre i tourne à la même vitesse.

9.  Appareil selon l'une quelconque des revendications précédentes, qui comprend un panneau de commande configuré pour contrôler au moins l'un des paramètres suivants : vitesse de chacun des arbres rotatifs $v_i$ (12a, 11a, 10a), sens de mouvement de chaque arbre rotatif (12a, 11a, 10a) et valeur de temps maximale pendant lequel un arbre i tourne à la même vitesse $t_i$.

10. Procédé pour générer une microgravité simulée au moyen d'un appareil (1) comprenant un premier corps rotatif (12) configuré pour tourner autour d'un premier arbre (12a) par l'actionnement d'un premier moyen d'actionnement (24) ; un moyen (60) pour loger un échantillon, le moyen (60) étant circonscrit dans le premier corps rotatif (12) et étant relié au premier corps rotatif (12) ; un deuxième corps rotatif (11) configuré pour tourner autour d'un deuxième arbre (11a) par l'actionnement d'un deuxième moyen d'actionnement (23), le premier corps rotatif (12) étant disposé à l'intérieur d'un volume délimité par le deuxième corps rotatif (11) lorsqu'il tourne autour dudit deuxième arbre (11a), et étant relié au deuxième corps rotatif (11) ; et un troisième corps rotatif (10) configuré pour tourner autour d'un troisième arbre (10a) par l'actionnement de troisièmes moyens d'actionnement (21, 22), le deuxième corps rotatif (11) étant disposé à l'intérieur d'un volume délimité par le troisième corps rotatif (10) lorsqu'il tourne autour du troisième arbre (10a), et étant relié au troisième corps rotatif (10), lesdits premiers (24), deuxièmes (23) et troisièmes (21, 22) moyens d'actionnement étant indépendants les uns des autres, le procédé consistant à :

faire tourner lesdits premier, deuxième et troisième corps rotatifs (12, 11, 10) autour desdits arbres (12a, 11a, 10a) par l'actionnement indépendant desdits premier (24), deuxième (23) et troisième (21, 22) moyens d'actionnement, contrôler la rotation de chacun des arbres (12a, 11a, 10a) par l'application, dans chacun desdits arbres (12a, 11a, 10a), d'une valeur pseudo-aléatoire de vitesse de rotation $v_i$ qui varie entre une valeur minimale $v_{min\_i}$ et une valeur maximale $v_{max\_i}$ préalablement établies pour chaque arbre i, pendant une valeur de temps pseudo-aléatoire $t_i$ qui varie entre une valeur minimale $t_{min\_i}$ et une valeur maximale $t_{max\_i}$ préalablement établies pour chaque arbre i.

11. Procédé selon la revendication 10, dans lequel la valeur de vitesse de rotation minimale $v_{min\_i}$ pour chaque arbre est obtenue comme suit :

> calculer une vitesse angulaire à laquelle ledit arbre doit tourner pour atteindre un certain niveau de microgravité à une certaine distance du centre dudit moyen (60),
> calculer un pourcentage de ladite vitesse angulaire, ledit pourcentage étant la valeur minimale $v_{min\_i}$.

**12.** Procédé selon l'une quelconque des revendications 10 ou 11, dans lequel ladite valeur pseudo-aléatoire de vitesse de rotation de chacun desdits arbres (12a, 11a, 10a) est calculée comme suit pour chaque arbre i :

$$\text{vitesse de rotation dans l'arbre i } vi \text{ (tr/min)} = (v_{max\_i} - v_{min\_i})^* \text{rand()} + v_{min\_i}$$

où *rand()* est une fonction qui génère une valeur de temps pseudo-aléatoire réelle comprise entre 0,0 et 1,0, $v_{max\_i}$ est la vitesse de rotation maximale de l'arbre i et $v_{min\_i}$ est la vitesse de rotation minimale de l'arbre i ; et ladite valeur de temps pseudo-aléatoire pendant lequel chaque arbre i tourne à la vitesse de rotation calculée est calculée comme suit :

$$\text{temps pour un changement de vitesse de l'arbre i } t_i \text{ (s)} = (t_{max\_i} - t_{min\_i})^* \text{rand()} + t_{min\_i}$$

où rand () est la même fonction précédente, $t_{max\_i}$ est le temps maximal pour un changement de vitesse maintenant le sens de rotation de l'arbre i, et $t_{min\_i}$ est le temps minimal pour un changement de vitesse maintenant le sens de rotation de l'arbre i.

**13.** Procédé selon l'une quelconque des revendications 10 à 12, comprenant en outre le contrôle du sens de rotation de chacun desdits arbres (12a, 11a, 10a) par l'application d'un changement de direction dans chaque arbre i chaque fois que s'écoule un temps dont la valeur est une valeur pseudo-aléatoire variant entre une valeur minimale *t_Dir min_i* et une valeur maximale *t_Dir max_i* préalablement établies pour chaque arbre i.

**14.** Procédé selon la revendication 13, dans lequel ladite valeur de temps pseudo-aléatoire pour l'application d'un changement de direction dans chacun desdits arbres (12a, 11a, 10a) est calculée comme suit pour chaque arbre i :

$$t\_Dir\_i = (t\_Dir\_max\_i - t\_Dir\_min\_i)^* \text{ rand()} + t\_Dir\text{-}min\text{-}i$$

où rand() est une fonction qui génère une valeur aléatoire ou pseudo-aléatoire réelle comprise entre 0,0 et 1,0, *t_Dir_max_i* est le temps maximal pour un changement de direction dans l'arbre i et *t_Dir_min_i* est le temps minimal pour un changement de direction dans l'arbre i, ledit changement de direction donnant lieu à un nouveau calcul de la vitesse de rotation dans l'arbre i et à un nouveau calcul du temps pour un changement de vitesse.

**FIG. 1A**

EP 3 782 915 B1

**FIG. 1B**

FIG. 1C

**FIG. 2**

EP 3 782 915 B1

v(RPM)

$v_i$

$t\_Acel$

$t_{Rpm\_cte} + t\_Acel$

t

**FIG. 3**

CENTRIPETAL GRAVITIES

FIG. 4

FIG. 5A

FIG. 5B

FIG. 5C

FIG. 5D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20160103454 A1
- US 20160163218 A1

- US 2003041800 A1

### Non-patent literature cited in the description

- **BECKER JL1 ; SOUZA GR.** Using space-based investigations to inform cancer research on Earth. *Nat Rev Cancer.,* May 2013, vol. 13 (5), 315-27
- **HELDER MARCAL ; BRENDAN P. BURNS ; ELIZABETH BLABER.** A Human Mission to Mars: A Bioastronautics Analysis of Biomedical Risks. *Journal of Cosmology,* 2010, vol. 12, 3748-3757
- **AKIRA HIGASHIBATA ; TOKO HASHIZUME ; KANAKO NEMOTO ; NAHOKO HIGASHITANI ; TIMOTHY ETHERIDGE ; CHIHIRO MORI ; SHUNSUKE HARADA ; TOMOKO SUGIMOTO ; NATHANIEL J SEWCZYK ; SHOJI A BABA.** Microgravity elicits reproducible alterations in cytoskeletal and metabolic gene and protein expression in space-flown Caenorhabditis elegans. *npj Microgravity,* 2016, vol. 2
- **SHEN H ; LIM C ; SCHWARTZ AG ; ANDREEV-ANDRIEVSKIY A ; DEYMIER AC ; THOMOPOULOS S.** Effects of spaceflight on the muscles of the murine shoulder. *FASEB J.,* 17 August 2017, vol. 31 (12), 5466-5477
- **VIDYASEKAR P et al.** *Genome wide expression profiling of cancer cell line cultured in microgravity reveals significant dysregulation of cell cycle and MicroRNA gene networks,* 2015
- **PISANU ME et al.** *Lung cancer stem cell lose their sternness default state after exposure to microgravity), inhibiting the growth and proliferation of cancer cells,* 2014
- **KIM YJ et al.** *Time-averaged simulated microgravity (taSMG) inhibit proliferation of lymphoma cells, L540 and HDLM-2, using a 3D clinostat,* 2017
- **ZHAO T et al.** *Simulated microgravity promotes cell apoptosis through suppressing Uev1A/TICAM/TRAF/NIκβ-Regulated anti-apoptosis and p53/PCNA,* 2016
- **OTSUKA K et al.** *Long-term exposure to space's microgravity alters the time structure of heart rate variability of astronauts); on the neurological system,* 2016

- **CAPRIHAN A et al.** *Effect of headdown tilt on brain water distribution,* 1999
- **KAWAI YET.** *Effects of microgravity on cerebral hemodynamics,* 2003
- **IWASAKI K et al.** *Human cerebral autoregulation before, during and after spaceflight,* 2007
- **LI KE et al.** *Effect of simulated microgravity on human brain gray matter and white matter-evidence from MRI,* 2015
- **LANG T et al.** *Towards human exploration of space-the THESEUS review series on muscle and bone research priorities); and on the immune system,* 2017
- **MUDHOPADHYAY S et al.** *A systems biology pipeline identifies new immune and disease-related molecular signatures and networks in human cells during microgravity exposure,* 2016
- **RAÚL HERRANZ ; ALBERTO BENGURÍA ; DAVID A. LAVÁN ; IRENE LÓPEZ-VIDRIERO ; GILBERT GASSET ; F. JAVIER MEDINA ; JACK J. W. A. VAN LOON ; ROBERTO MARCO.** Spaceflight-related suboptimal conditions can 5 accentuate the altered gravity response of Drosophila transcriptome. *Molecular Ecology.,* 31 August 2010, vol. 19, 4255-42664
- **RAÚL HERRANZ ; DAVID A. LAVÁN ; F. JAVIER MEDINA ; JACK J. W. A. VAN LOON ; ROBERTO MARCO.** Drosophila Gene Experiment in the Spanish Soyuz Mission to the ISS: II Effects of the Containment Constraints. *Microgravity Science and Technology.,* vol. 21, 299-304
- **NETHERLANDS, HERRANZ ; R. LAVAN ; D.A. BENGURIA ; A. DUQUE ; P. LEANDRO ; L.J. GASSET ; G. MEDINA ; F.J. VAN LOON ; J. MARCO, R.** Gene. *Experiment in the Spanish Soyuz Mission to the ISS. Effects of the cold transportation step''. Microgravity Science and Technology,* 2007, 196-200

- **NETHERLANDS, L.J. LEANDRO ; N.J. SZEWCZYK ; A. BENGURÍA ; R. HERRANZ ; D. LAVÁN ; F.J. MEDINA ; G. GASSET ; J. VAN LOON ; C.A. 15 CONLEY ; R. MARCO.** Comparative analysis of Drosophila melanogaster and Caenorhabditis elegans gene expression experiments in the European Soyuz flights to the International Space Station. *Advances in Space Research*
- **SETLOW RB.** *The hazards of space travel,* 2003
- **HERRANZ R et al.** *Ground-based facilities for simulation of microgravity-organism-specific recommendations for their use, and recommended terminology,* 2013
- **JACK J.W.A. VAN LOON.** Some history and use of the random positioning machine, RPM, in gravity-related research. *Advances in Space Research,* vol. 39 (7), 1161-1165
- **HOSON T1 ; KAMISAKA S ; MASUDA Y ; YAMASHITA M ; BUCHEN B.** Evaluation of the three-dimensional clinostat as a simulator of weightlessness. *Planta,* 1997, 203
- **ANKEN R.** *Simulation of microgravity for studies in gravitational biology - Principles, apparatuses and applications,* 2013
- **BRIEGLEB W.** *Some qualitative and quantitative aspects of the fast-rotating clinostat as a research tool,* 1992
- **KLAUS DM et al.** *Functional weightlessness during clinorotation of cell suspensions,* 2001
- **UVA BM et al.** Microgravity-induced apoptosis in cultured glial cells. *Eur. J. Histochem,* 2002
- **THIEL CORA S. et al.** Rapid adaptation to microgravity in mammalian macrophage cells. *Scientific Reports,* 2017
- **KORDYUM EL.** Plant cell gravisensity and adaptation to microgravity. *Plant Biology,* 2014
- **A. G. BORST et al.** Technology and Developments for the Random Positioning Machine, RPM. *MICROGRAVITY, SCIENCE AND TECHNOLOGY,* 03 September 2008, vol. 21 (4), 287-292